# EUROPEAN PATENT SPECIFICATION

(11) **EP 1 830 517 B1**
(45) Date of publication and mention of the grant of the patent: **12.08.2009**
(21) Application number: 06004417.9
(22) Date of filing: 03.03.2006
(51) Int. Cl.: H04L 12/28, H04L 29/06

(54) **A method, communication system, central and peripheral communication unit for secure packet oriented transfer of information**
Verfahren, Kommunikationssystem, zentrales und peripheres Kommunikationsgerät für eine geschützte packetorientierte Informationsübertragung
Procédé, système de communication, unité de communication centrale et périphérique de transfer d'information par paquet protégé

(43) Date of publication of application: 05.09.2007
(73) Proprietor: Nokia Siemens Networks GmbH & Co. KG, 81541 München (DE)
(72) Inventor: Freire, Mario, 6200-330 Covilha (PT); Hajduczenia, Marek, 4505-314 Fiaes (PT); Inacio, Pedro, 6200-230 Aldeia de Carvalho (PT); Monteiro, Paulo, 3830-209 Ilhavo (PT); Silva, Henrique, Prof., 3030-076 Coimbra (PT)

(56) References cited:
- US-A1- 2004 028 409
- SUN-SIK ROH ET AL: "Security model and authentication protocol in EPON-based optical access network" TRANSPARENT OPTICAL NETWORKS, 2003. PROCEEDINGS OF 2003 5TH INTERNATIONAL CONFERENCE ON WARSAW, POLAND 29 JUNE-3 JULY 2003, PISCATAWAY, NJ, USA,IEEE, US, vol. 1, 29 June 2003 (2003-06-29), pages 99-102, XP010681404 ISBN: 0-7803-7816-4
- JUNNI ZOU ET AL: "Implementation of internet access control with FPGA for wireless LAN" EMERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM ON SHANGHAI, CHINA MAY 31-JUNE 2, 2004, PISCATAWAY, NJ, USA,IEEE, 31 May 2004 (2004-05-31), pages 229-232, XP010716059 ISBN: 0-7803-7938-1

## Description

Access networks connect business and residential subscribers to the central offices of service providers, which in turn are connected to metropolitan area networks (MANs) or wide area networks (WANs). Access networks are commonly referred to as the last mile or first mile, where the latter term emphasizes their importance to subscribers. In today's access networks, telephone companies deploy digital subscriber loop (xDSL) technologies and cable companies deploy cable modems. Typically, these access networks are hybrid fiber coax (HFC) systems with an optical fiber based feeder network between central office and remote node and an electrical distribution network between remote node and subscribers. These access technologies are unable to provide enough bandwidth to current high-speed Gigabit Ethernet local area networks (LANs) and evolving services, e.g., distributed gaming or video on demand. Future first-mile solutions not only have to provide more bandwidth but also have to meet the cost-sensitivity constraints of access networks arising from the small number of cost sharing subscribers.

A passive optical network (PON) is a point-to-multipoint optical access network with no active elements in signal path from source to destination. Here all the transmissions are performed between the OLT (optical line terminal) and ONUs (optical network units). The OLT resides in the central office of network service providers and connect the optical access network to the Metropolitan area network (MAN) or wide area network (WAN). On the other hand the ONU is located at the end user location and provides broadband video, data and voice services. Passive optical networks (PONs) address the last mile of communication infrastructure between the service provider's central office (CO), head end or point of presence (POP) and business or residential customer locations. Data, voice and video must be offered over the same high-speed connection with guarantees on Quality-of -Service and the ability to purchase bandwidth as on need basis.

Ethernet PONs (EPONs) have gained a great amount of interest both in industry and academia as a promising cost-effective solution of next-generation broadband access networks, as illustrated by the formation of several fora and working groups, including the EPON Forum (http://www.ieeecommunities.org/epon), the Ethernet in the First Mile Alliance (http://www.efmalliance.org), and the IEEE 802.3ah working group (http://www.ieee802.org/3/efm). EPONs carry data encapsulated in Ethernet frames, which makes it easy to carry IP packets and eases the interoperability with installed Ethernet LANs. EPONs represent the convergence of low-cost Ethernet equipment (switches, network interface cards (NICs)) and low-cost fiber architectures. Furthermore, given the fact that more than 90% of today's data traffic originates from and terminates in Ethernet LANs, EPONs appear to be a natural candidate for future first-mile solutions. The main standardization body behind EPON is the IEEE 802.3ah Task Force. This task force is developing the so-called multipoint control protocol (MPCP) which arbitrates the channel access among central office and subscribers. MPCP is used for dynamically assigning the upstream bandwidth (subscriber-to-service provider), which is the key challenge in the access protocol design for EPONs.

Typically, EPONs (and PONs in general) have a physical tree topology with the central office located at the root and the subscribers connected to the leaf nodes of the tree. At the root of the tree is an optical line terminal (OLT) which is the service provider equipment residing at the central office. The EPON connects the OLT to multiple optical network units (ONU) (the customer premise equipment) through a 1 : N optical splitter/combiner. An ONU can serve a single residential or business subscriber, referred to as Fiber-to-the-Home/Business (FTTH/B), or multiple subscribers, referred to as Fiber-to-the-curb (FTTC). Each ONU buffers data received from the attached subscriber(s). In general, the round-trip time (RTT) between OLT and each ONU is different. Due to the directional properties of the optical splitter/combiner the OLT is able to broadcast data to all ONUs in the downstream direction. In the upstream direction, however, ONUs cannot communicate directly with one another. Instead, each ONU is able to send data only to the OLT. Thus, in the downstream direction an EPON may be viewed as a point-to-multipoint network and in the upstream direction, an EPON may be viewed as a multipoint-to-point network. Due to this fact, the original Ethernet media access control (MAC) protocol does not operate properly since it relies on a broadcast medium.

In the upstream direction, all ONUs share the transmission medium. To avoid collisions, several approaches can be used. Wavelength division multiplexing (WDM) is currently considered cost prohibitive since the OLT would require a tunable receiver or a receiver array to receive data on multiple wavelength channels and each ONU would need to be equipped with a wavelength-specific transceiver. At present, time division multiplexing (TDM) is considered a more cost-effective solution. With TDM a single transceiver is required at the OLT and there is just one type of ONU equipment.

The MPCP arbitration mechanism developed by the IEEE 802.3ah Task Force is used to dynamically assign non-overlapping upstream transmission windows (time slots) to each ONU. Beside auto-discovery, registration, and ranging (RTT computation) operations for newly added ONUs, MPCP provides the signalling infrastructure (control plane) for coordinating the data transmissions from the ONUs to the OLT.

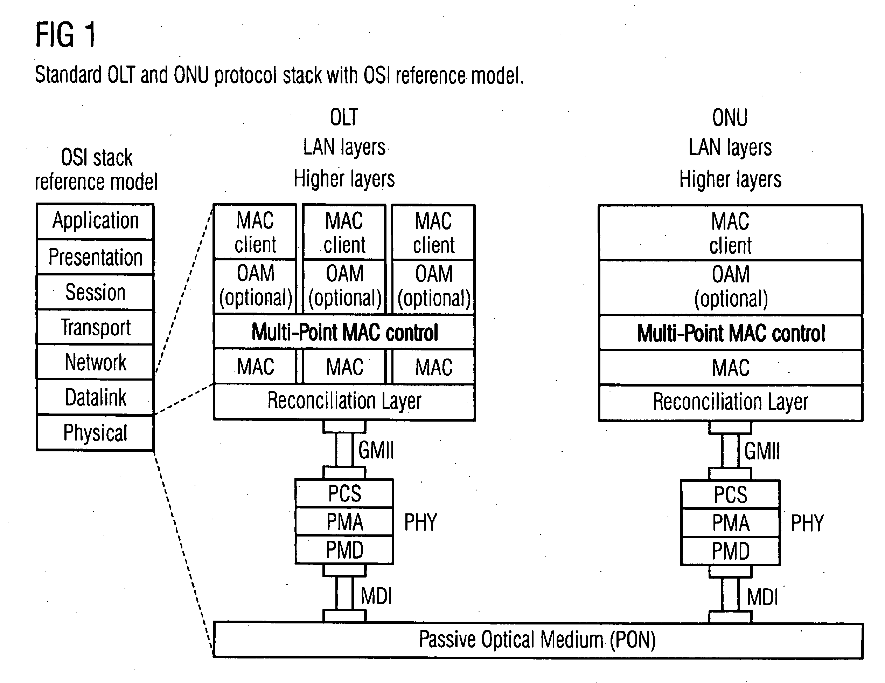

The basic idea is that the upstream bandwidth is divided into bandwidth units via TDM. These units are assigned to the ONUs as is determined by the OLT according to the DBA algorithm in use. The OLT has control over the assignment of these units of bandwidth. These units can be assigned on the fly as needed or can be reserved in advance. For efficiency reasons, any reserved units or fraction of units of bandwidth that go unused can in general be re-assigned on the fly by the OLT to other ONUs that could make use of it. As shown in FIG 1, MPCP uses two types of messages to facilitate arbitration: REPORT and GATE. Each ONU has a set of queues, possibly prioritized, holding Ethernet frames ready for upstream transmission to the OLT. The REPORT message is used by an ONU to report bandwidth requirements (typically in the form of queue occupancies) to the OLT. A REPORT message can support the reporting of up to thirteen queue occupancies of the corresponding ONU. Upon receiving a REPORT message, the OLT passes it to the DBA algorithm module. The DBA module calculates the upstream transmission schedule of all ONUs such that channel collisions are avoided. Note that MPCP does not specify any particular DBA algorithm. MPCP simply provides a framework for the implementation of various DBA algorithms. After executing the DBA algorithm, the OLT transmits GATE messages to issue transmission grants. Each GATE message can support up to four transmission grants. Each transmission grant contains the transmission start time and transmission length of the corresponding ONU. Each ONU updates its local clock using the timestamp contained in each received transmission grant. Thus, each ONU is able to acquire and maintain global synchronization. The transmission start time is expressed as an absolute timestamp according to this global synchronization. Each ONU sends backlogged Ethernet frames during its granted transmission window using its local intra-ONU scheduler. The intra-ONU scheduler schedules the packet transmission from the various local queues. The transmission window may comprise multiple Ethernet frames; packet fragmentation is not allowed. As a consequence, if the next frame does not fit into the current transmission window it has to be deferred to the next granted transmission window.

The above mentioned arbitration mechanism is the basic mechanism that controls the flow of data packets in the EPON and it is used by higher level functions to perform dynamic bandwidth allocation (DBA) and ONU synchronization, and to execute the ranging process. The entity that receives a GATE and responds with a REPORT (if requested by a central controller) is called a logical link or logical connection, and is identified by a Logical Link IDentifier (LLID). LLID is a numeric identifier assigned to a Point-to-Multi-Point P2MP association between an OLT and an ONU, established through the Point-to-Point Emulation sublayer. Each P2MP association is assigned a unique LLID. The P2MP association is bound to an ONU DTE, where a MAC would observe a private association.

The number of LLIDs per ONU is a design choice and is typically hardware limited only. Additionally, any LLID may have one or more data queues associated with it, used for storing subscriber generated data. The current IEEE 802.3ah standard uses an asymmetrical format for these two control messages:
- REPORT messages carry information upstream about the states of individual queues associated with each particular LLID;
- GATE messages convey aggregate downstream grants pertinent to all of the queues associated with each LLID.

The number of LLIDs instantiated for a particular ONU has a profound impact on the system performance and is actually one of the most important design choices made in the design of a fully functional EPON system with inherent tri-play support.

Security requirements in EPON (Ethernet Passive Optical Network) networks result from the fact that EPON typically aims at providing services to two different types of customers, namely residential (private) and premium (business, companies etc) using the same network resources and structure. These two distinctive customer classes have various security requirements:
- residential customers might want their data to be secure though this is definitely not a priority for them, since all secure information exchanged for example during online shopping, etc., is transmitted using TLS/SSL (Transport Layer Security /Secure Sockets Layer) technology;
- premium customers require strict information security policy, thus data origin authentication, encryption and data privacy are of highest importance.

One of the characteristics of the EPON network, defining its popularity, is the broadcast character of the downstream channel, which is also potentially available to any interested party capable of operating an end station (ONU - Optical Network Unit) in promiscuous mode and disabling the standard EPON packet filtering policies. Such a malicious ONU might receive all the downstream packets and monitor the data flows directed at a particular target ONU, performing various forms of network attacks:
***Eavesdropping*** is a form of an attack featuring operating an ONU in promiscuous mode; being exposed to all downstream traffic, such an ONU can listen to traffic intended to other ONUs. Point-to-point emulation adds Logical Link IDs (LLID) [1] that allow an ONU to recognize frames intended for it and to filter out the rest. However, this mechanism does not offer the required security since an ONU might disable this filtering and monitor all downstream traffic;
***Theft of Service (ToS)*** occurs when a subscriber impersonates a neighbour and transmits upstream data frames that are not billed to the impersonator's account. An OLT (Optical Line Terminal) obtains the identity of the subscriber through the LLID inserted by each ONU in the frame preamble, which can be faked by the malicious ONU when transmitting in the upstream direction. The only thing that the malicious ONU requires to perform such an attack is a capability to monitor the downstream traffic and receive GATE messages addressed to a victim.
***Denial of Service (DoS)*** occurs when a malicious ONU prevents a standard ONU from obtaining any kind of services from the OLT. This kind of attacks are usually performed by sending fake/forged upstream messages that disturb downstream and upstream communications and alter some key system files in order to deny, in some way, a given service.

The following set of service level threats have been identified:
- downstream payload of all subscribers visible in all EPON ONU access points;
- knowledge of amount and type of traffic to neighbours may be seen as privacy violation even if payload encryption if fully supported (as in currently existing security mechanisms);
- knowledge of MAC addresses used by neighbours may be a privacy problem;
- downstream MPCP (Multi Point Control Protocol) messages can reveal upstream traffic characteristics of each ONU;
- upstream PON traffic may, in certain conditions, be detectable from ONU access points;
- if end users succeed to hack into ONU OAM channel, they may be able to change EPON system configuration;
- if end users succeed to hack into OAM (Operations, Administration and Maintenance) channels, they may get access to operators TMN network beyond the EPON system;
- if end user can decode key exchange mechanisms, he can bypass the protection system;
- end user may try to disturb the PON by sending optical signals upstream, this could generate restarts which may ease hacking the protection mechanisms;
- by using information from registration and gate messages it may be possible to masquerade as another ONU;
- privacy is compromised if proper authentication and data authenticity check is not carried out;

The upstream transmission channel in an EPON network structure is considered to be relatively secure. Due to directivity of a Passive Splitter Combiner (PSC) located at the Remote Node (RN) the upstream traffic is typically visible only to the OLT. Although backward reflections might occur in the PSC, reflecting a small fraction of upstream signal power in the downstream, the downstream transmission occurs at a different wavelength than the upstream transmissions and standard ONUs are equipped with a single received operating at the downstream wavelength only. Thus, the ONU is considered to be blind to reflected traffic since it is not processed in the receiver circuitry (filtered out).

However, the same PSC that provides the network structure connectivity can also be used to carry out a network attack. The upstream traffic can be intercepted at the very PSC since they are typically manufactured as symmetric devices, meaning that even though only one entry port is typically utilised to transmit the OLT signal downstream, more ports are available though unused. This problem is typically mitigated by enclosing the PSC in a modular, solid package with the unused ports enclosed within the package which can be only opened causing its complete destruction. Such packaging technology disables a possibility of carrying out a highly dangerous form of an attack where a special set of devices is attached to the PSC to monitor all downstream and upstream traffic by utilising the unused PSC ports.

In general, in order to ensure the EPON network structure security, network operators must be able to guarantee subscriber privacy and confidentiality, data origin authentication and efficient encryption mechanism, allowing for controlling subscriber's access to the infrastructure. Encryption of downstream transmission prevents eavesdropping when the encryption key is not shared among all ONUs, providing privacy for subscriber data and making impersonation of another ONU difficult. Thus, a point-to-point virtual secure tunnel is created that allows private communication between the OLT and the different ONUs and supports existing authentication standard (IEEE 802.1 x).

Encryption of the upstream transmission prevents interception of the upstream traffic when a tap is added at the PSC device. Upstream encryption also prevents impersonation, as the ONU generating a frame must possess a key presumably known only to this particular ONU.

Payload security is typically considered as the only security mechanism targeted at providing data privacy, confidentiality and data origin authentication in the EPON network structure. Payload security mechanisms considered for implementation in EPON network structures are by default based on the AES (Advanced Encryption Standard) 128 bit mechanism, due to its strong cryptographic properties and very long life cycle as well as direct hardware implementation.

US 2004/0028409 A1 proposes increasing a security level when transmitting data in an EPON system. The method includes encrypting the payload and also a protected tag header field which is used to transmit various optional information associated with a data originating station, integrity check information, security label information, fragment ID information and flag information. However, the method does not provide protection against data mining and monitoring as important fields of the header are unprotected.

"Security model and authentication protocol in EPON-based optical access network" by Sun-Sik Roh et al., published in Proceedings of 2003 5th International conference on Transparent Optical networks, 2003, shortly discusses and rejects placing the encryption process at the physical layer which would encrypt the entire EPON data stream. A big downside of this approach is that borders of data frames would become unrecognisable in the downstream from the OLT rendering this approach unfeasible.

Although Encryption of the Ethernet Frame Payload has already been proposed as a solution to the confidentiality problems, it does not solve totally the confidentiality and privacy problem, and the exchange of the keys is not designed in the best suited way. Additionally, all EPON specific existing key agreement protocols are designed to operate in a centralised mode, where the OLT is responsible for generation and delivery of the security keys to all ONUs, though this takes place in an insecure downstream channel. Such protocol design makes sense from a logical point of view, since the best processing capabilities are located in the OLT (better and more powerful microprocessor) while ONUs should remain simple and be equipped with relatively low-priced electronics.

Pure payload encryption does not prevent data monitoring and masquerading (DoS / ToS attacks), since a promiscuous ONU can be maliciously connected to the EPON system and store all downstream traffic for further analyses based on a LLID classification. Data mining techniques can infer important information about users connected to the EPON structure. Payload encryption assures limited and indirect data origin authentication to the OLT only at MPCP layer (only the ONU with the correct key can send correctly encrypted data payloads).

The present invention is therefore directed to mitigate the limitations of the above mentioned solutions. The object of the invention is achieved in the features of claims 1 and 16.

Under the inventive method for packet oriented transfer of information between a central communication unit and several peripheral communication units over a communication network, data packets are transferred over the network comprising a header field and a payload field. At least a part of header-information included in the header field is being encrypted at transmitter side and is being decrypted at receiver side whereby the received data packets are being processed on the basis of the decrypted header-information. The at least one part of the header-information is en-crypted by at least one first key or by at least one key derived from that which itself is encrypted by at least one second key. The at least one first key or the key derived from that is generated new respectively for each data packet (dp) to be transferred. The encrypted at least one first key or the encrypted key derived from that is inserted into the data packet and LLID information included in the header field is encrypted by the at least one first key or the key derived from that.

One of the main advantages of the inventive encryption of the preamble is to prevent malicious data mining techniques without imposing transmission delay.

Further advantageous embodiments of the method including a communication system, a central and a peripheral communication unit according to the invention will emerge from the further claims.

The method according to the invention is explained in more detail below with references to several drawings, in which
- FIG 1: shows Standard OLT and ONU protocol stack with OSI reference model.

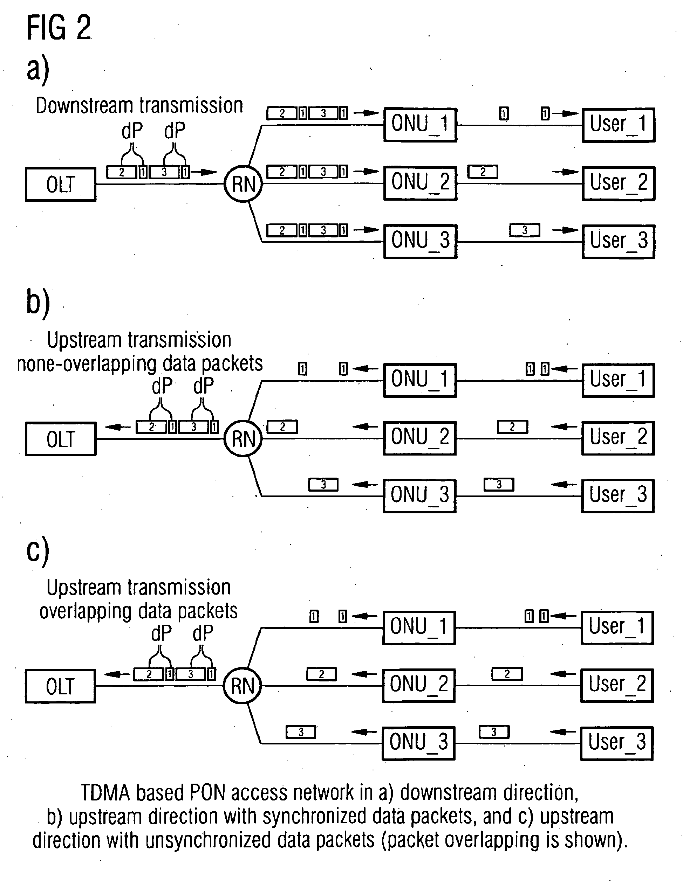

- FIG 2: shows TDMA based PON access network in
a) downstream direction
b) upstream direction with synchronized data packets
c) upstream direction with unsynchronized data packets (packet overlapping is shown)
- FIG 3: shows Extended structure of the Reconciliation layer with EDFPSP and EDFLSP layers inserted in between LLID filtering layer.
- FIG 4: shows Preamble formats:
a) standard Ethernet preamble
b) EPON specific preamble with LLID extensions-preamble depicted in light red colour, data frame payload in light blue
- FIG 5: shows adopted preamble encryption mechanism:
- FIG 6: shows Key exchange process during a modified discovery handshake

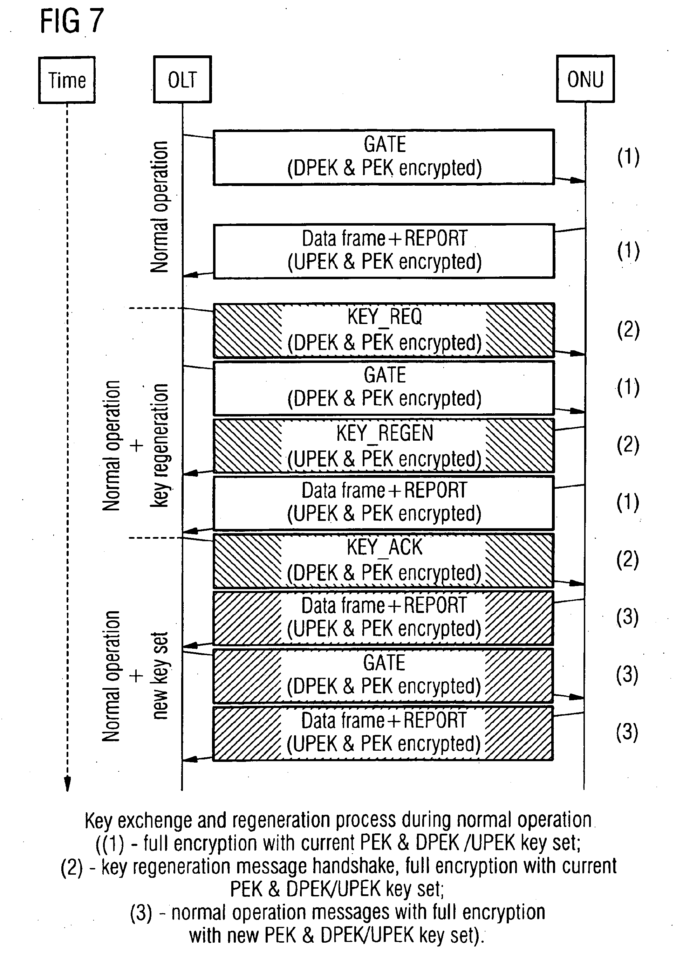

- FIG 7: shows Key exchange and regeneration process during normal operation

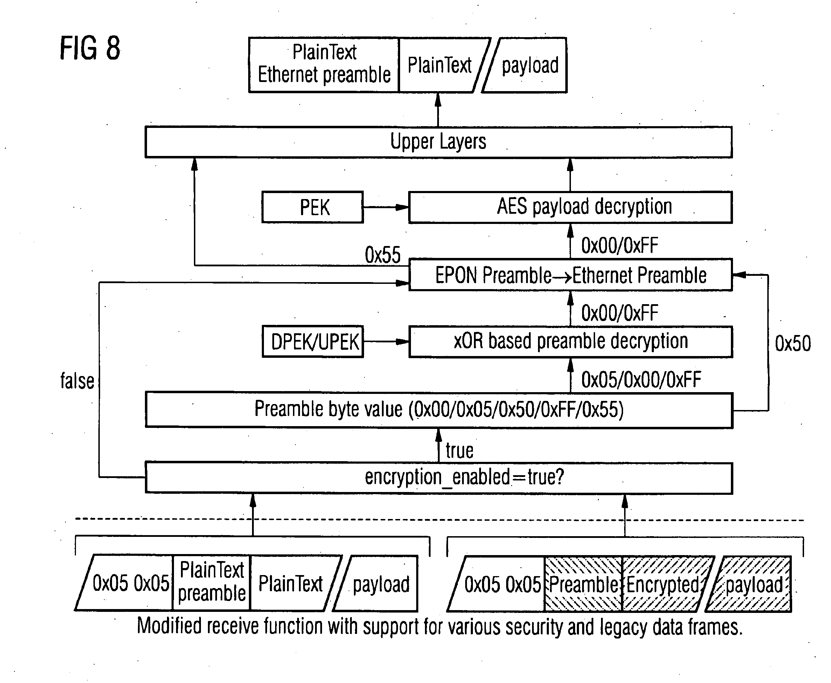

- FIG 8: shows modified receive function with support for various security and legacy data frames.

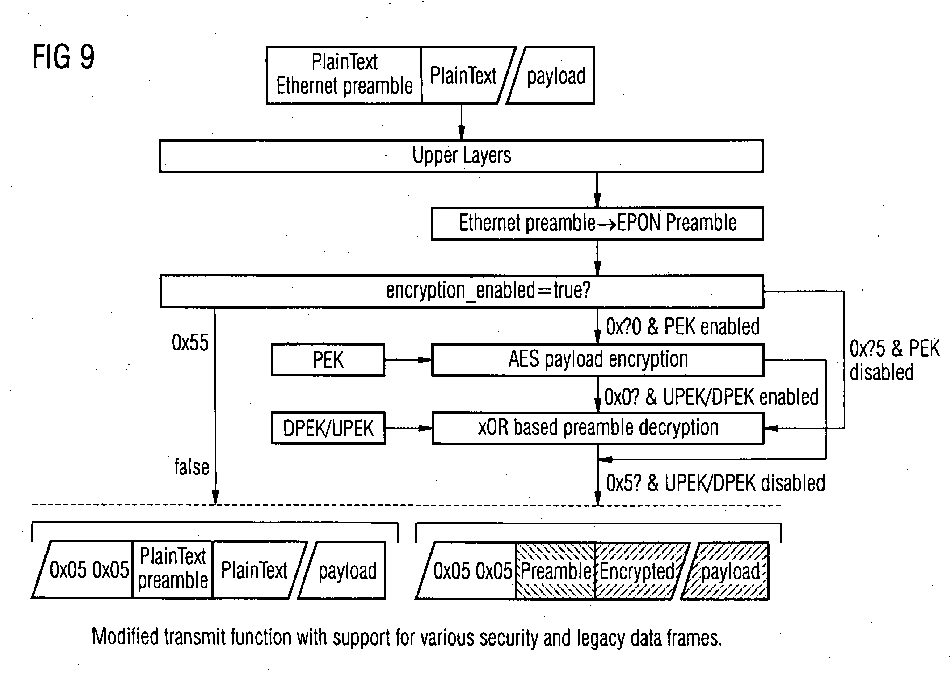

- FIG 9: shows modified transmit function with support for various security and legacy data frames.

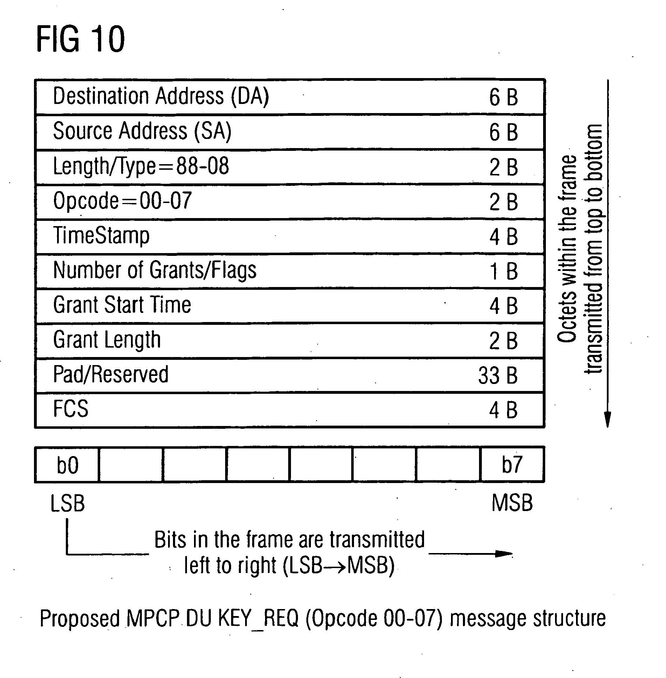

- FIG 10: shows proposed MPCP DU KEY_REQ (Opcode 00-07₁₆) message structure.
- FIG 11: shows proposed MPCP DU KEY_REGEN (Opcode 00-08₁₆) message structure.

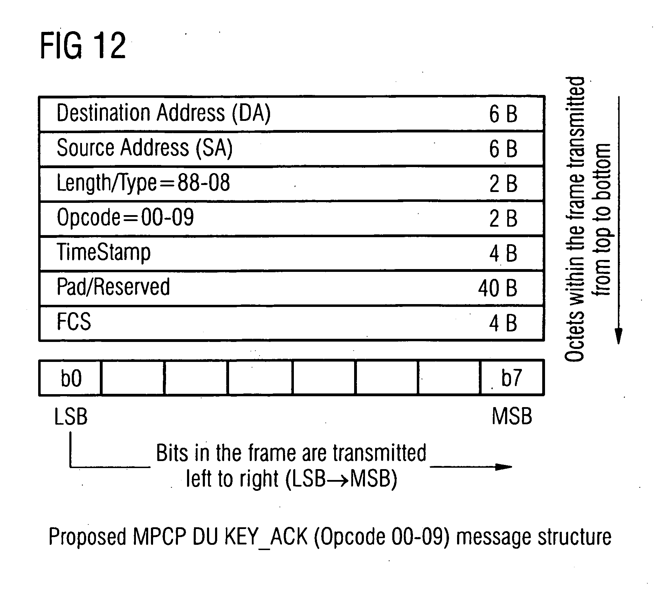

- FIG 12: shows proposed MPCP DU KEY_ACK (Opcode 00-09₁₆) message structure.
- FIG 13 A-F: are showing an example for encryption according to the inventive chaotic encryption in a self explaining manner
- FIG 14 A-D: are showing an example for decryption according to the inventive chaotic encryption in a self explaining manner

Problems related to lack of privacy and confidentiality arise from the downstream broadcast character of EPON data stream, which fits perfectly the requirements of the Ethernet standard, though pose a series of data privacy related problems, including various types of possible network attacks, data mining and monitoring, service denial and theft, masquerading etc just to name a few. Data origin authentication for both transmission channels (upstream and downstream) would mitigate the problems connected with Denial or Steal of Service Attacks (D/SoS) performed by placing a malicious ONU in the EPON system and would allow for concurrent existence of at least two customer classes within the same network structure, as indicated above.

The following sections contain formal descriptions of two adopted security protocols. Since the already existing protocol stack of the EPON network requires data to be in plain-text format at the upper end of the Reconciliation layer (RS), both security protocols have been designed to operate at the bottom of RS layer and to maintain complete transparency and backward compatibility with the EPON network components not supporting encryption and authentication. Ethernet Data Frame Preamble Security Protocol (*EDFPSP*) and Ethernet Data Frame Payload Security Protocol (*EDFLSP*) are thus located at the borderline between the GMII (Gigabit Media Independent Interface) and RS layers Fig 1 and perform the encryption/decryption processes as well as data origin authentication without imposing any changes in the already existing EPON protocol stack. The only necessary modifications in the existing EPON structure feature:
- update of receive and transmit functions at ONUs and OLT;
- introduction of AES specialised processing units (capable of encryption and decryption);
- introduction of xOR specialised processing units (capable of performing chaotic encryption and decryption operations);
- addition of several new functions connected with recognition of signalling and frame format as well as decision making process;
- preamble and payload decryption mechanisms are separated by LLID filtering layer operating on standard filtering rules;
- FCS (Frame Check Sequence) field is used as a second stage filtering agent running at the MAC layer;
- The MAC layer still receives and produces data frames in plain text format - all changes are performed at the RS layer and are transparent to the upper layer stack;
- The DBA (Dynamic Bandwidth Allocation) agent at the OLT receives a new functionality - creating, maintaining and updating a valid list of key sets to be used for decryption;
- Introduction of a separate key regeneration handshake commenced by the OLT and featuring key exchange and regeneration process;
- Hardware level random number generators for both ONUs and OLT, featuring low implementation cost and reasonable random number quality (128 bit long sequences at most).

### Ethernet Data Frame Preamble Security Protocol (EDFPSP)

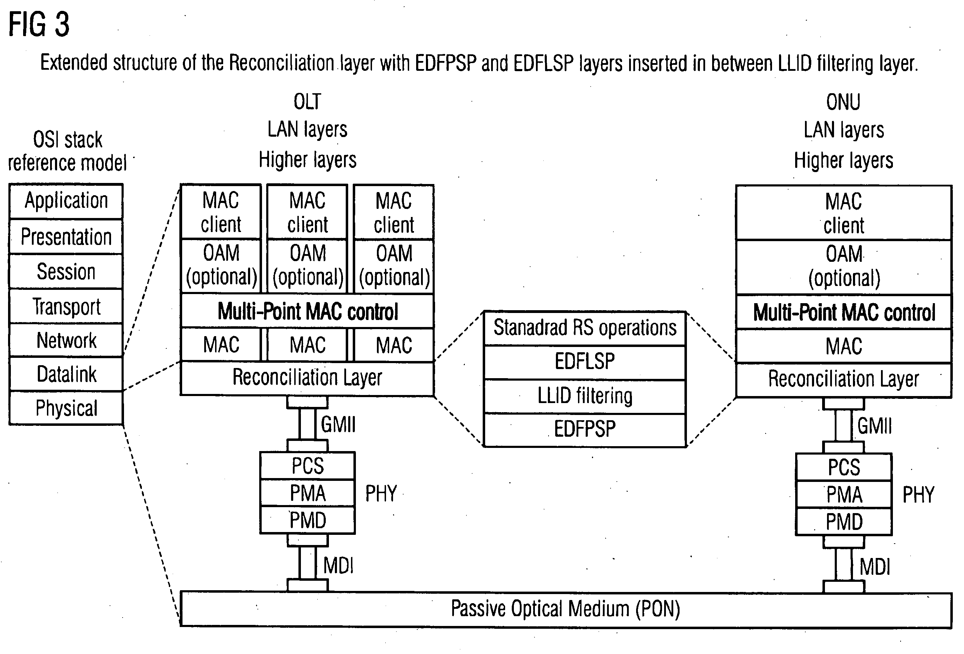

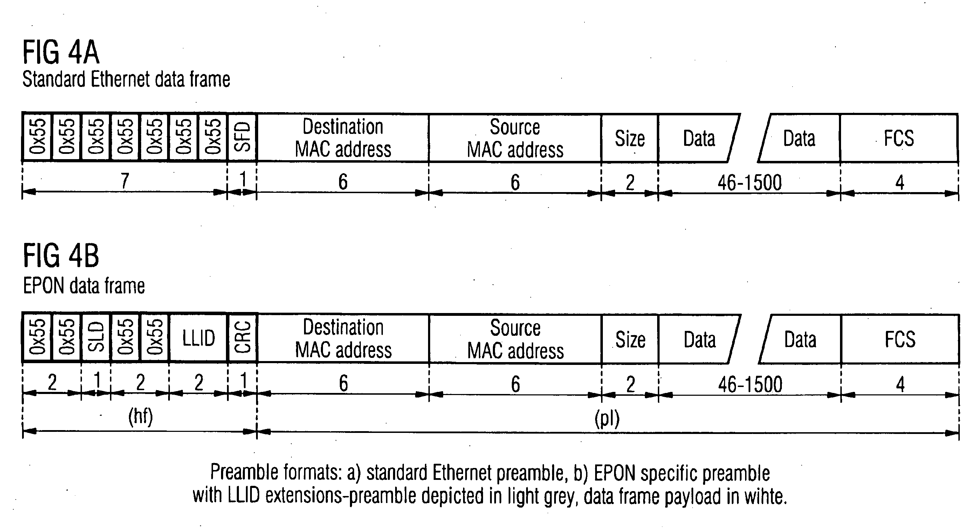

The following section describes in detail the proposed security protocol targeted at securing transmission of LLID information in the Ethernet frame preamble over the EPON network structure. As indicated previously, this particular security protocol is supposed to operate at the bottom level of the RS layer of the EPON protocol stack (see FIG 3 and FIG 4) and to maintain full backward compatibility, meaning that unencrypted data packets should bypass this particular layer and move directly to RS layer, maintaining standard EPON stack layer data flow.

In order to support and maintain a secure data transmission between two EPON entities residing at both ends of the P2P emulated transmission channel, it is necessary for both of them to have the prior knowledge about the current UPEK/DPEK key pair to be used for encryption of the LLID and CRC8 chaotic keys. The mechanisms provided for UPEK/DPEK key pair generation, regeneration and exchange are presented in detail later.

A new arriving data frame is received from the PHY level and passed to the *detect_encryption* function, which is responsible for detection of EDFLSP / EDFPSP encryption and passing the data frame to a proper decryption function. The data frame preamble shall be therefore subject to the *decrypt_UPEK*/ *decrypt_DPEK* function (depending on the data flow direction), which performs xOR operation as described in detail later and restores the original frame preamble structure. Once the LLID and CRC8 fields are decrypted, LLID filtering rules are applied as stipulated in [1], followed by calculation of the CRC8 value over preamble data fields numbers 3 to 8. Assuming that a mismatching LLID is encountered, the frame is discarded. The same operation is carried out in case of a mismatching CRC8 value. On success, the frame is passed to the *decrypt_PEK* function, to perform payload decryption specific operations.

On the other hand, a data frame arriving from the upper protocol stack layers (designated for transmission) has to pass through the *encrypt_PEK* function, if the payload encryption is enabled and then should be encrypted in the preamble section (assuming that the preamble encryption is enabled for the given EPON entity). The encryption process also uses a UPEK/DPEK key (depending on the data flow direction) and is based on the xOR operation.

Detailed state machines for *decrypt_UPEK*/*decrypt_DPEK, encrypt _UPEK*/ *encrypt _DPEK*, modified *receive* and *transmit* functions are presented later.

### Why use EDFPSP security mechanism?

EDFPSP security mechanism is included in the proposed overall EPON LinkSec mechanism for a number of reasons:
- assures data origin authentication in the upstream direction since the OLT shall discard any data frames that are transmitted in the upstream direction and which have the Ethernet Data Frame Preambles (EDFP) encrypted with a mismatching key; in other words only the ONU with a proper and OLT recognised key is allowed to transmit a valid packet in the upstream channel;
- additionally, EPON critical set-up data in the form of LLID information is protected against possible masquerading attempts since the downstream (*DPEK*) and upstream (*UPEK*) keys are different - a malicious ONU even upon interception of all downstream frames targeted at the monitored ONU can obtain only its session *DPEK*, while *UPEK* cannot be assessed since these two keys are mutually independent.
- moreover, even though *DPEK* and *UPEK* keys are only 24 bits long and changed periodically in the result of the key regeneration process interception and tracking of a particular ONU is impossible due to chaotic preamble encryption. Even though the DPEK/UPEK key remains the same for a number of consecutive data frames, the LLID and CRC8 data fields are encrypted with the random key sequence, which is then encrypted with the constant DPEK/UPEK, resulting in a random value in the LLID and CRC8, that changes from packet to packet even for the same LLID. This way the computational effort required for decryption of a preamble is exorbitant. An attacker would have to check first of all possible combinations of UPEK/DPEK key, and for each key test all possible combinations of a random sequence used to actually encrypt LLID and CRC8 field. Then there are also all possible LLID combinations to check. The fact that the next frame designated for the same LLID will be encrypted with a different chaotic key means that an attacker has no way of performing any comparative tests against decoded data. This way low level data privacy is assured and no information can be deducted by eavesdropping passively the downstream communications, presenting a very effective means of anti-monitoring protection.

### Data encryption / decryption process in the EDFPSP security mechanism

In order to assure complete data privacy, which is of special importance in the downstream direction, EDFPSP must be based on a non-predictive encryption mechanism. Two approaches are possible:
- LLID and CRC8 fields in the EDFP can be encrypted directly using 24 bit UPEK/DPEK keys, allowing for upstream and downstream channel separation;
- LLID and CRC8 fields in the EDFP can be encrypted with randomly generated 16 and 8 bit long keys, valid only for a given packet, that are notified to the EPON entity (ONU/OLT) in the EDFP and are encrypted using currently valid DPEK/UPEK key set.

Due to data flow monitoring concerns and wide availability of high volume / performance mass storage memory, the adopted encryption method for LLID should allow for maximum privacy of the encoded data, maintaining simultaneously simple key exchange mechanism and minimum overhead imposed on the overall system.

The proposed EDFPSP security protocol utilises therefore the second above presented encryption mechanism for downstream and upstream data flows. The target LLID shall be encrypted with a random sequence of 16 bits, and the CRC8 field with an 8 bit long sequence. The random key sequences cannot be transmitted to the ONU in plain text, and it is also undesirable to transmit a separate MPCP message with a new random key sequence every time a data packet is going to be transmitted downstream. Such a solution would result in a huge bandwidth waste and overall system performance degradation.

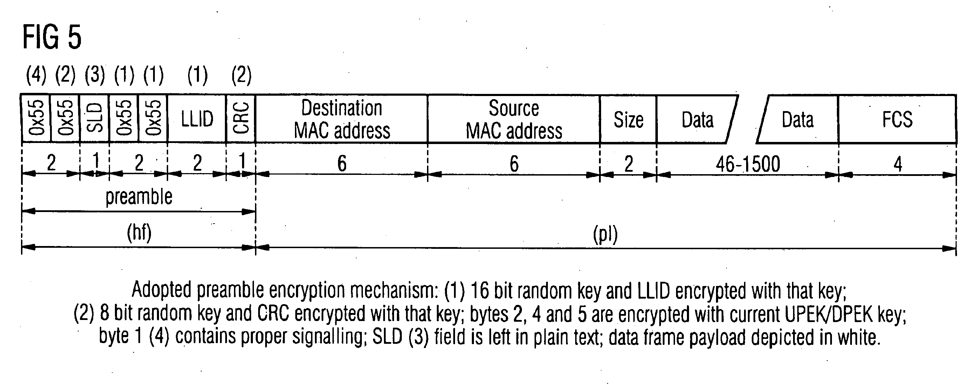

Since the EDFP contains in total 4 bytes conveying 0x55 sequences, which are assigned no particular meaning in the EPON system, it is possible to use 3 of them (bytes numbers 2, 4, and 5: 24 bits in total) for transmission of current random encryption keys valid only for the given packet. In this scenario, byte 2 would convey the current random key for the CRC8 block, while bytes 4 and 5 would carry the current 16 bit long random key for the LLID block (see FIG 5).

In order to further improve the cryptographic strength of the adopted scenario, the current random keys for the LLID and CRC8 blocks (conveyed in preamble bytes numbers 2, 4, and 5) would be encrypted with the currently valid DPEK key, resulting in the UPEK/DPEK keys size of 24 bits.

In the upstream, in order to maintain the proposed system's simplicity, the very same LLID and CRC8 encryption mechanism can be adopted, meaning that random keys would be generated (or pre-generated) by the ONU and used to encrypt the LLID and CRC8, then stored in the preamble bytes 2, 4, and 5, which then are encrypted with the currently valid UPEK key. This way, both ONU and OLT share the same privacy and preamble encryption mechanism that can assure both high level of data privacy as well as increase the cryptographic strength of the proposed solution. No existing monitoring system is capable of decoding randomly encrypted LLID and CRC8 fields, assuming that the UPEK and DPEK keys are secure.

### UPEK / DPEK key size

The size of the *UPEK*/*DPEK* key is closely linked with the size of the secured data field size, which in this case is the EDFP, typically 8 bytes (64 bits) long. Internal structure of the Preamble is presented in [2] and depicted in FIG 4.b.

**Table 1: Preamble/SFD replacement mapping**

| Offset | Field | Preamble/SFD | Modified preamble/SFD |
|---|---|---|---|
| 1 | - | 0x55 | 0x55 |
| 2 | - | 0x55 | 0x55 |
| 3 | SLD | 0x55 | 0xD5 |
| 4 | - | 0x55 | 0x55 |
| 5 | - | 0x55 | 0x55 |
| 6 | LLID[15::8] | 0x55 | mode::LLID[14::8] |
| 7 | LLID[7::0] | 0x55 | LLID[7::0] |
| 8 | CRC8 | 0x55 | CRC8 [bits 3...7] |

The EPON *transmit* function in the extended RS layer replaces some of the octets of the original Ethernet preamble(see FIG4.a) as transmitted by the MAC with the following fields [3]:
- SLD (start of LLID delimiter), which is used by the receiver function to locate the LLID and CRC8 fields;
- LLID data field, which is two octets in length and replaces the last two octets of preamble. The LLID field is a concatenation of the *mode* (1 bit) and *logical_link_id (LLID)* (15 bits) variables for the associated MAC,
- CRC8 data field, which contains an 8-bit *Cyclic Redundancy Check* value. This value is computed as a function of the contents of the modified preamble beginning with the SLD field (offset 3) through the LLID field (offset 7). The CRC8 encoding process is defined Clause 65.1.3.2.3 of [3],
- four data fields (bits 1,2,4 and 5) are mapped from the original Ethernet into the EPON specific preamble without any change.

The preamble contains in total 8 bytes (64 bits), from which the 4 bytes (bits 1,2,4 and 5 - 32 bits in total) do not convey any useful information and are filled with a standard 0/1 sequence (0x55) (see Table 1), thus it is not necessary to subject them to encryption/decryption. The SLD field always conveys the same value (0xD5) since the LLID has always a constant offset, thus it is also not necessary to encrypt/ decrypt it. Thus from the total preamble size of 8 bytes (64 bits) only LLID and CRC8 fields (3 bytes - 24 bits) need to be encrypted.

As indicated, the adopted encryption mechanism requires encryption of 3 data fields (bytes 2,4,5) storing random key sequences used to encrypt the LLID and CRC8 fields, thus in total the length of the required UPEK/DPEK key does not change and remains at 24 bits.

### Key regeneration in EDFPSP security mechanism

In order to assure the highest possible encryption quality, the Encryption process should use the key with the same length as the sequence to be encrypted. In case of the employed preamble encryption mechanism as indicated above, the LLID and CRC8 fields are actually encrypted with a random 16 + 8 bit key (orange and green boxes - see FIG 5), which is then stored in the preamble bytes number 2, 4 and 5 as depicted in FIG 4 and Table 1 and encrypted with the currently valid UPEK/DPEK key depending on the data flow direction.

In such a system, the LLID and CRC8 blocks are encrypted with a random key that is variable and completely uncorrelated even between two consecutive packets directed at the very same LLID. The random key itself is encrypted with UPEK/DPEK key, producing again a random and uncorrelated value. In the proposed system the only information left in the plain text in the data frame preamble is the SLD delimiter and the byte number 1 (used for signalling purposes). The SLD pointer always contains the same value and its encryption would result in a security compromise, thus its exclusion is reasonable. Any attacker attempting to scan the downstream traffic in this case will fail as any LLID oriented filtering and monitoring of the downstream packets will collect random packets from various ONUs, resulting in misinterpretation and false conclusions. This is after all a way of protecting a user data privacy.

Since the payload encryption mechanism is based on the AES 128 bit key, it does not impose any limitations in terms of key life time. The utilised chaotic encryption mechanism with periodically changed UPEK/DPEK key pair features even longer life cycle, since the UPEK/DPEK 24 bit long key in connection with xOR encryption / decryption mechanism and chaotic key used to encrypt the LLID and CRC8 blocks do not allow for any form of statistical or monitoring attack, resulting in a very strong data privacy mechanism designed for EPONs. Since both used encryption mechanisms are very strong and are not time limited, the key regeneration cycle can be defined at any arbitrary value within a reasonable range, for example 15 minutes. Ethernet Data Frame payLoad Security Protocol (EDFLSP)

The following paragraph describes in detail the proposed security protocol targeted at securing transmission of general data in the Ethernet frame payload over the EPON network structure. As indicated previously, this particular security protocol is supposed to operate at the bottom level of the RS layer of the EPON protocol stack (see FIG 1 and FIG 3) and to maintain full backward compatibility, meaning that unencrypted data packets should bypass this particular layer and move directly to RS layer, maintaining standard EPON stack layer data flow.

In order to support and maintain a secure data transmission between two EPON entities residing at both ends of the P2P (Point To Point) emulated transmission channel, it is necessary for both of them to have prior knowledge about the current PEK (Payload Encryption Key) key to be used for encryption of the payload. The mechanisms provided for PEK key generation, regeneration and exchange are presented in detail later respectively.

A new arriving data frame is received from the PHY level and passed to the *detect_encryption* function, which is responsible for detection of EDFLSP / EDFPSP encryption and passing the data frame to a proper decryption function. In case of EDFLSP, the packet is considered to have already the LLID matching and filtering process completed and the EPON specific preamble has been already properly decrypted and matched, as indicated above. The data frame payload shall be therefore subject to *decrypt_PEK* function, which performs 128 bit AES decryption process, using current valid PEK key assigned to a particular ONU MAC address, and restores the original payload bit structure. Once *decrypt_PEK* is complete, the FCS (CRC32) is calculated over the decoded data frame payload and compared with the value transmitted with the given data frame. Should any mismatch occur, the frame is considered to be invalid and is discarded. On success, the decoded frame is passed to the upper stack layers for further processing in the standard data flow.

On the other hand, a data frame arriving from the upper protocol stack layers (designated for transmission) needs to be encrypted in the payload section using the currently valid 128 bit AES PEK key. Assuming that the encryption mechanism is enabled within the system and the given EPON entity has a valid PEK key assigned to a particular MAC address, the arriving data frame shall be passed to the *encrypt_PEK* function, responsible for encrypting the data frame payload using the128 bit AES key. On success, the data frame is passed to the *encrypt_DPEK*/*UPEK* function, which performs its specific operations on the data frame, as indicated above.

Detailed state machines for *encrypt_PEK, decrypt_PEK*, modified *receive* and *transmit* functions are presented later.

### Why use EDFLSP security mechanism?

Application and frequent regeneration of 128 bit long PEK keys following the AES standard provides high quality protection of user data against any monitoring or eavesdropping attacks.

Assuming that each ONU supporting LinkSec mechanism has a private PEK key, which is unknown to other ONUs (private), and even though the system allows for un-unique PEK keys (two or more ONUs can share the same PEK key without loss of generality and security mechanism quality), the adopted mechanism allows for data origin authentication to both ends of a logical link.

### PEK key size

The Ethernet Data Frame payLoad (EDFL) is typically of a size between 64 and 1500 bytes, as defined in [1], therefore the minimum key size to be used in EDFLSP mechanism is 64 bytes. Since the AES encryption/decryption mechanism was adopted for EDFLSP security protocol due to its superior cryptographic properties and simple encryption/decryption mechanism, one of the available key sizes needs to be selected (128, 192 and 256 bits). AES related literature indicates that 128 bit encryption key has a very good cryptographic strength [4, 5].

### Key regeneration in EDFLSP security mechanism

Since the *EDFLSP* security mechanism is based on AES 128 bit key, its lifetime is estimated at 21 years using state of the art mainframe access. The EDFPSP mechanism is based on chaotic cipher coding, which connected with a 24 bit chaotic key change per frame, provides a UPEK/DPEK life cycle way superior to that of AES mechanism. Therefore neither AES 128 bit key nor the preamble encryption/decryption with combined chaotic / xOR encryption as such impose any frequency limitations in terms of validity [4, 5].

### Data encryption / decryption process in the EDFLSP security mechanism

The adopted encryption mechanism for EDFLSP is based on 128 bit long AES key, used both for upstream and downstream EDFL encryption/decryption. The key strength [4, 5] is sufficient to assure secure transmission in both directions without the need to utilise separate upstream and downstream keys, which limits the memory requirements in terms of storage and distribution of the PEK keys, as well as signalling protocol complexity.

### Modifications to discovery handshake

In this section, the term "standard discovery handshake" stands for the discovery protocol as described in [2], thus the proposed security mechanism introduces only minor changes into the aforementioned process.

After the UPEK/DPEK key pair is generated, the ONU shall await the start of the next discovery window to attempt registration in the EPON network structure. Since in the proposed security mechanism for the preamble, it is the ONU that generates the security keys, it has to notify the central controller located in the OLT about their existence and their values. This process is super-imposed over the standard registration process during which the OLT allows new ONUs to notify the central network controller on their presence and attempt registration in the network structure so as to obtain access to network resources. The valid key set is either generated during the boot-up sequence as described later (first key set for the given ONU) or results from a regeneration process as described later:
In either case, upon the beginning of the discovery window, the ONU always contains the valid key set, thus the discovery process itself does not need to trigger internally key set generation event. Additionally, the necessary changes in the standard discovery handshake procedure are as follows:
   - DPEK/UPEK/PEK/ONU ID key set is to be included in the very first message transmitted upstream from an ONU attempting registration at the OLT (REGISTER_REQ - during the discovery window as an answer to the DISCOVERY type GATE). The original REGISTER_REQ message features an empty payload field of 38 bytes (308 bits), thus can accommodate 128 bit long ONU ID, 128 bit long PEK key and two 24 bit long preamble keys (UPEK/DPEK key set) - in total 304 bits;
   - the OLT central controller upon proper reception of the REGISTER_REQ parses the frame, extracts the data conveyed in the packet's payload, and performs the following operations:
      ○ bind the ONU ID to the ONU MAC address for future reference and data origin authentication, as described in section entitled "ONU ID and its meaning";
      ○ bind the ONU PEK key to the ONU MAC address so that all downstream and upstream packet payloads can be encrypted using the aforementioned key;
      ○ bind the ONU UPEK/DPEK key set to the ONU MAC address so that all downstream and upstream packets can have their preambles encrypted optionally with the UPEK/DPEK key, accordingly.
      Once the key binding process is complete, the normal discovery handshake process is continued;
- The REGISTER MPCP DU message shall be the first message transmitted from the OLT to the given ONU and already contains partially encrypted data frame. The payload is encrypted using PEK key while preamble is transmitted in plain-text due to broadcast LLID. Encryption of the payload data fields is performed according to the process described in detail in section entitled "Ethernet Data Frame payLoad Security Protocol (EDFLSP)" on a fully functional REGISTER message, at the end of the *transmit* function in the OLT. Additionally, since the REGISTER message is the first message in this cycle to use a new key set, the first preamble byte shall be modified as defined in to notify the ONU on key exchange event.
- Immediately after the REGISTER MPCP DU, the OLT shall create an instance of the MPCP DU GATE message, encrypt it with the proper PEK and DPEK keys and transmits downstream. Detailed description of the GATE message is provided in [2]. The GATE shall have its two first preamble byte follows the signalling rules defined above.
- Upon reception of the REGISTER message, the ONU shall:
   ○ Update its current key set by discarding the previous set (empty in this case) and approve the pending key set;
   ○ Decrypt the downstream REGISTER using the key set and verify the frame's integrity. Should any problems arise (errors in the CRC in the preamble, etc.) or standard filtering rules are not met, the frame shall be discarded and the following REGISTER_ACK message will be produced with the NACK value.
   ○ Otherwise, the ONU shall create a REGISTER_ACK MPCP DU message, encrypt it with the UPEK and PEK keys and transmit upstream at the proper moment of time defined in the GATE message. Standard signalling mechanism is defined in section entitled "Security mechanism signalling".
- Upon reception of the REGISTER_ACK message, the OLT shall attempt to decrypt this message with the currently valid key set for the given ONU. In the event of failure, ONU registration will be assumed to have failed thus any registration linked with the ONU in question shall be deleted. The ONU will have therefore to again undergo the registration process and repeat the attempt.

### Multiple LLIDs per ONU

In a general case we can expect a multiple LLID per ONU scenario, in which a single ONU shall be assigned a certain number of LLIDs, typically smaller than the number of supported queues. Since each new LLID has to be registered in the OLT to allow the OLT based DBA agent to perform full scheduling and polling relative to the LLID and not the ONU, each LLID has to go through a complete discovery handshake in order to assure it is properly registered and bound. However, since the full key set (both PEK and UPEK/DPEK keys) is associated with the ONU MAC address, there is no need to generate a new set of keys for each LLID that the given ONU might support.

When the ONU attempts to register a new LLID during the discovery window, the ONU shall include a currently valid key set in the REGISTER_REQ message, as indicated in section entitled "Modifications to discovery handshake". In case of multiple LLIDs per ONU scenario, the second and following LLIDs should find always the same valid key set thus will always follow the same procedure as stipulated above. The only change in this case is the processing at the OLT level. Upon reception of an LLID registration attempt, the OLT shall perform the key set table look-up to check whether the given MAC address has already an associated key set. In case of a first LLID registration, the function shall find no entry in the table, thus a full key set binding process is performed as indicated above. The following LLID attempt request originating from the same ONU MAC address shall find an entry in the key set table, and thus the key binding process is going to be bypassed. Therefore, in a general case the multiple LLID per ONU scenario is fully supported with a single key set (containing PEK, UPEK and DPEK as well as ONU ID) per ONU MAC address.

### Key regeneration handshake

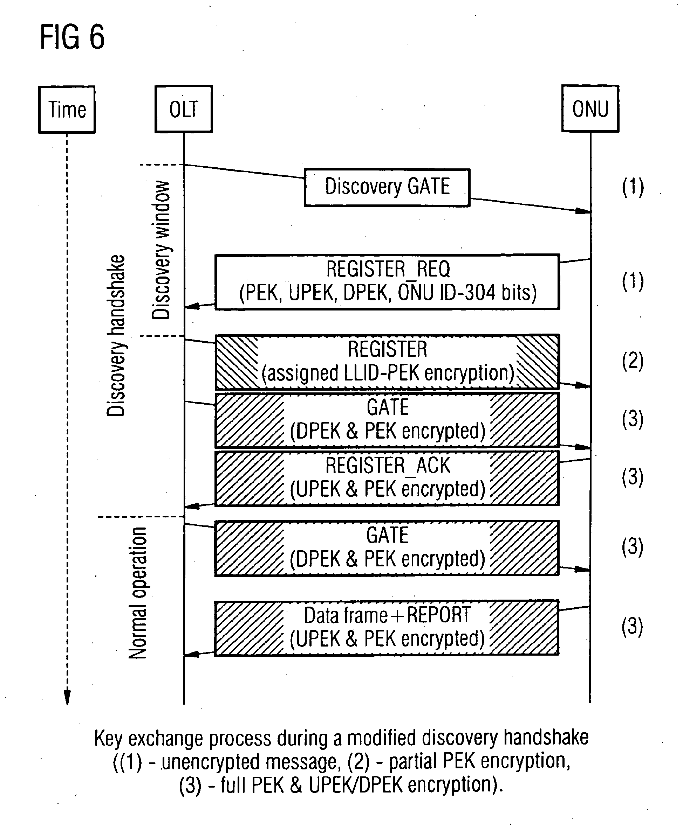

The key exchange (regeneration) process is initiated by the OLT as a central controller, since the OLT keeps track of the first registration moment of the particular UPEK/DPEK/PEK/ONU ID key set, which occurs during the discovery window upon registration attempt of the first LLID belonging to the given ONU. When the life cycle of the particular key pair comes to an end, the OLT shall invoke the key regeneration process, which contains the following steps:
- the OLT shall create an MPCP DU instance with 00-07 Opcode (KEY_REQ - see later), which is tagged with one of the LLIDs belonging to the particular ONU. LLID selection is of lesser importance as long as it is bound to a particular ONU MAC address. The KEY_REQ message is then transmitted downstream to a particular ONU indicating that the OLT requests the given ONU to repeat the key generation process and replace currently used UPEK/DPEK/PEK key set. Additionally, the KEY_REQ message, as indicated below, contains also GATE specific information about the start and size of the upstream transmission window required for transmission of the corresponding KEY_REGEN message. The KEY_REGEN transmission start time shall account for the required minimum standard ONU MPCP DU processing time (1024 TQ) as well as ONU minimum UPEK/DPEK/PEK key set generation time (100 TQ).
- upon reception of the KEY_REQ MPCP DU message, the ONU shall execute the key generation function, as described in section entitled "Key set generation/regeneration process", creating a new UPEK/DPEK/PEK/ONU ID key set. The new key set shall be placed in a specialised instance of the MPCP DU with 00-08₁₆ Opcode (KEY_REGEN - see section entitled "KEY_REGEN (proposed Opcode 00-08₁₆)"), tagged with any LLID supported by the given ONU. The UPEK/DPEK key pair shall be placed within the message payload immediately after the initial 128 bits of the PEK key, as indicated in section entitled "KEY_REGEN (proposed Opcode 00-08₁₆)". The key sequence is terminated with the ONU specific 128 bit long ID sequence, used as a verification sequence for additional data source origin verification. Once created, the KEY_REGEN message shall be encrypted with the current UPEK key (frame preamble - see section entitled "Ethernet Data Frame Preamble Security Protocol (EDFPSP)") and PEK key (frame payload - see section entitled "Ethernet Data Frame payLoad Security Protocol (EDFLSP)") and then transmitted at the moment of time indicated by KEY_REQ message and delivered to a proper MAC instance in the OLT. LLID selection in KEY_REGEN message is of lesser importance since the UPEK/DPEK/PEK/ONU ID key set is bound to the given MAC address and not the particular LLID instance.
- upon reception of the KEY_REGEN MPCP DU message, the OLT shall decrypt both frame preamble (using currently valid UPEK key for the given ONU) and frame payload (using currently valid PEK key for the given ONU) and process the message. The message contains a set of new keys generated by the particular ONU in the following sequence:
   ○ 128 bit long PEK key for AES payload encryption/decryption;
   ○ 24 bit long UPEK key + 24 bit long DPEK key;
   ○ 128 bit long ONU ID number (only for identification purposes).
- The keys are extracted from the KEY_REGEN by the specialised OLT function and placed in the appropriate hash tables sorted by the ONU MAC address. Therefore, it does not matter what LLID the new key set arrives with, as long as the frame contains proper ONU MAC address the specialised key extraction function can extract the new set of keys and bind them properly with the ONU MAC address.
- Once the KEY_REGEN message is properly parsed, the OLT controller creates an instance of a specialised MPCP DU message with Opcode 00-09 (KEY_ACK), the sole task of which is to confirm proper key reception, regeneration and binding and to make sure that the ONU changes the local copies of the key set as well. Since the KEY_ACK is the first message encrypted with the new key set (DPEK and PEK keys), the ONU must be notified on key exchange event, thus the first byte of the KEY_ACK message preamble is modified as indicated below and FIG 6.

An alternative approach was also examined, under which an ONU would be forced to re-register all its LLIDs, so as to generate a new UPEK/DPEK/PEK/ONU ID key set and inform the OLT on their existence. However, that would result in a service interruption, especially in case of a significant number of ONUs attempting re-registration at the same time. Moreover, multiple LLID per ONU scenario additionally complicates this approach, resulting in a several cycle long service interruption, which is unacceptable in case of real-time service delivery (for example VoIP - Voice over IP) and SLA (Service Level Agreement) guarantees.

### Security mechanism signalling

In order to maintain full backward compatibility of the proposed security mechanism, the encrypted frames must be signalled to the other end station so that:
- data packets originating from a LinkSec incompatible device bypass the decryption layer and follow only the standard information flow in the system;
- data packets originating from LinkSec compliant devices are properly parsed, decoded, decrypted (both optional preamble and payload encryption), and only then are allowed to follow the standard information flow in the EPON system.
   The proposed security mechanism signalling can be achieved in a simple manner by using the first unused preamble byte (containing 0x55 value, see Table 1 and FIG 4) as a large flag field.
- In case of a non-LinkSec data packet, the original value of 0x55 is preserved for backward compatibility. The *receive* function in the ONU/OLT shall check values conveyed in this particular field and, upon reception of 0x55, the decryption mechanism (both for the preamble and payload) is bypassed completely and the standard information flow in the EPON system is maintained.
- In case of preamble encryption option activated, the aforementioned byte shall be set to 0x05 value, indicating that payload encryption is switched off (binary value 0000 0101), thus the receive function shall parse the packets and forward it to the *decrypt_DPEK*/*decrypt_UPEK* function (depending on the flow direction), specialised for the given entity, while the *decrypt_PEK* function shall be bypassed.
- In case of payload encryption option activated, the aforementioned byte shall be set to 0x28 value, indicating that preamble encryption is switched off (binary value 0101 0000), thus the receive function shall parse the packets and forward it to the *decrypt_PEK* function, specialised for the given entity, while the *decrypt_DPEK*/*decrypt_UPEK* function (depending on the flow direction), shall be bypassed.
- In case of both payload and preamble encryption option activated, the aforementioned byte shall be set to 0x00 (binary value 0000 0000) and both *decrypt_DPEK*/*decrypt_UPEK* function (depending on the flow direction) and *decrypt_PEK* functions shall be executed, before passing the packet to the standard data flow.

Additionally, in order to avoid the processing delay imposed by the MPCP signalling protocol in case of ONUs (which can be an overkill in case of standard imposed 1024 TQ delay for processing a single MPCP message), the first preamble byte can be also assigned a mask value of 0xFF, indicating that the given MPCP message is the first message encrypted with the new key set. The aforementioned 0xFF flag has different meaning in terms of data stream direction:
- In the downstream direction, the OLT tags a data packet with 0xFF flag only when a particular ONU is requested to complete the key regeneration process. As indicated, the key regeneration process is initialised by the OLT (KEY_REQ), in response to which the ONU transmits upstream a new key set (containing UPEK/DPEK/PEK and ONU ID in the KEY_REGEN and the OLT is supposed to respond with the KEY_ACK, after which the ONU should switch instantly to a new key set, generated locally and notified previously to the OLT using secure upstream channel connection. In the downstream direction, the KEY_ACK is therefore the only message tagged with the 0xFF byte in the preamble, forcing the ONU to dispose of the previous key set and use the new one. The ONU shall react to 0xFF flag in the packet preamble only when a previous KEY_REGEN was transmitted to the OLT in the upstream direction, setting the *key_regen* flag to **true**.
- In the upstream direction, the 0xFF data frame tagging is utilised by the ONU to signal the OLT a beginning of a data frame originating from this ONU. Since the DBA agent at the OLT shall be responsible only for creating, updating and maintaining a valid list of UPEK and PEK keys to be used when receiving upstream frames from ONU, the ONU itself must make sure that the OLT uses the right key for decryption of its upstream frames. By default, the OLT shall therefore use the current UPEK/PEK key pair until receiving the first frame tagged with the 0xFF flag. At the ONU level, only the first packet originating from the particular LLID shall be tagged with the 0xFF flag, forcing the OLT to change the current key set.

This way the receiving entity at the data link layer can already decide upon utilisation of new key set and disposal of the previous one. This mechanism is very important in case of the key regeneration handshake, when the ONU is notified by the OLT in the KEY_ACK message that the OLT had properly received, bound and assigned new key set. Moreover, the KEY_ACK is the first message encrypted with the new key set, thus the ONU needs to be notified that all the following messages (inclusive) are going to use a new key set. Such simple signalling allows for bypassing standard imposed limitation of 1024 TQ for MPCP message processing and uncertainty as to which of the following packets is already encrypted with the new key set.

In order to assure a simple and secure key regeneration mechanism, the OLT key agent shall be responsible for distributing only one KEY_REQ message at a time and delaying the next one until a KEY_ACK is transmitted downstream as a complimentary message to the previously issued KEY_REQ message. In other words, only one key regeneration session can be under operation at the given moment of time. Such a limitation does not impose additional security threat in terms of key cryptographic strength since, as indicated above, both DPEK/UPEK and PEK key life cycle is much longer than the key validity cycle selected for the proposed security mechanism. This way, even a few cycle delay imposed by the key regeneration process and the need to wait for completion of the previous key regeneration sessions do not compromise the security and data privacy mechanisms envisaged for the EPON network.

A malicious ONU in this case cannot forge a downstream message directed at another ONU, thus no security threat is imposed this way. Additionally, since the ONU is the entity sending the KEY_REGEN message, it expects the KEY_ACK message from the OLT, thus a KEY_ACK message received without a preceding KEY_REGEN message shall be ignored.

### ONU ID and its meaning

The 128 bit long ONU ID identifier is an additional security check point added to ensure that the ONU attempting transmission and using the given set of UPEK/DPEK/PEK keys is actually the entity authorised to use the aforementioned key set and request any change in the key set values. The ONU ID sequence is generated during the ONU boot-up sequence and is strictly associated with the given ONU MAC address, thus only one ONU ID is available for all LLID associated with the given ONU. The ONU ID value is not correlated with the ONU MAC address and is a random value generated using the in-built high quality random number generator.

The OLT learns the ONU ID sequence during the discovery procedure when the first LLID from a particular ONU is registered in the system. All following attempts to change the key, respond to KEY_REQ message, or perform any security system related operations, shall be signed by inserting the unique 128 bit ONU ID number, acting as an electronic signature of the entity, into the MPCP DU request message (KEY_REGEN as described later). Providing that the ONU ID sequence mismatches the value stored in the OLT and associated with the given ONU MAC address, the OLT shall discard such MPCP message and ignore the KEY_REGEN message. Only fully matching ONU ID sequence allows for further processing and parsing of the KEY_REGEN message.

Presence of the unique ONU ID prevents certain types of DoS / ToS network structure attacks. Let's assume that a malicious ONU learns the current key set for a particular ONU, containing DPEK/UPEK key pair and PEK key as well. This way both upstream and downstream channels can be open for potential DoS attack during the key regeneration process. The malicious ONU will wait for a downstream KEY_REQ message directed at the target ONU and shall transmit a fake upstream KEY_REGEN message with a random key set sequence and a fake MAC ONU equal to the ONU MAC of the target ONU. The OLT could receive such a fake KEY_REGEN message and process it, changing its local key set into the fake one, then producing the KEY_ACK forcing the legitimate ONU to drop the previous key set and adopt the new one. However, since the ONU transmitted a legitimate key set that was ignored by the OLT due to message overlapping or too short time between consecutive transmissions originating from the same MAC address entity, it will adopt a new legitimate key set while the OLT shall adopt a fake key set, delivered by the malicious ONU. This way, both downstream and upstream channel access will be denied for the particular ONU since the key sets used by the ONU and OLT do not match any more. In such a case, the ONU needs to perform re-boot and undergo a complete re-registration to mitigate the problem. This way the malicious ONU occupies the place of the victim ONU and receives the downstream and upstream service. This is therefore a sort of a DoS attack on a particular ONU entity.

This type of an attack is by default mitigated by the presence and utilization of the ONU ID to sign the key regeneration and renewal requests, leading to increased security and data origin authentication, which are typically considered to be weak points of the Ethernet based data transmission. As mentioned before, no KEY_REGEN message will be processed without a matching ONU ID key, which is secure since it is not used during transmission and only during key exchange handshake.

### Key set generation/regeneration process

### UPEK/DPEK/PEK/ONU ID key set generation

The UPEK/DPEK/PEK/ONU ID key set is first generated by the given ONU upon system boot-up, using the in-built high quality random number generator with a randomized seed. In order to assure high quality random number values for all UPEK/DPEK/PEK/ONU ID key set components, the random number generator operating in the ONU should have a random seed, typically based on some stochastic process. Upon initialization, the ONU local clock contains such a random and uncorrelated value, which can be used as an initial seed for the required random number generator.

It is also envisaged that a high quality hardware implementation of a random number generator with a very long cycle (in excess of 2¹⁰⁰) should be used in order to assure proper cryptological properties of the generated random numbers. An open source Marsenne-Twister random number generator [6] is a good candidate for implementation, featuring both simple algorithm and good quality of the generated values, allowing for creation of uncorrelated UPEK/DPEK/PEK/ONU ID key set components with the following lengths: 48, 48, 128 and 128 bits, respectively.
Once the full UPEK/DPEK/PEK/ONU ID key set is generated and accounted for, the ONU shall continue with the standard boot-up process, resetting the local clock value into its default state (0) and waiting for the next discovery window to start.

The first UPEK/DPEK/PEK/ONU ID key set generated by the ONU during the boot-up process is also the only UPEK/DPEK/PEK/ONU ID key set ever transmitted by the given ONU to the OLT in plain-text format. All following UPEK/DPEK/PEK/ONU ID key sets are already transmitted to the ONU in a specific MPCP DU message with preamble properly encrypted using currently valid UPEK key, pre-assigned and approved for the given ONU.

### UPEK/DPEK/PEK key set re-generation

The key-regeneration process aims at creating new UPEK/DPEK/PEK key set components using the same random number generator as mentioned above. The key re-generation process can be triggered by:
An external OLT trigger in the form of KEY_REQ message, assuming that the ONU microprocessor is loaded continuously and that no free window was found to use option 2;
An internal ONU trigger, activated after a certain amount of idle cycles of the ONU microprocessor - this way a full key set can be pre-generated by the given ONU at an arbitrary moment of time, when the ONU microprocessor is free, and await ready in the ONU memory for arrival of the KEY_REQ message.

### Modified Receive / Transmit functions

### Receive function

The standard ***receive*** function of the extended RS as defined in [1] performs the following functions:
1. locates the SLD field;
2. uses the location of the SLD field to locate the CRC8 field and verifies that the received value matches the CRC calculated using the received data;
3. uses the location of the SLD field to locate the LLID field and parses it to determine the destination MAC;
4. if the packet is not discarded due to incorrect CRC or unknown LLID, then replaces the SLD and LLID fields with normal preamble and the CRC8 field with the SFD and transfers the packet to the appropriate MAC;
5. otherwise, discards the entire packet, replacing it with normal inter-frame.

In order to support the LinkSec, the ***receive*** function will have to be modified as follows:
1. locate the SLD field in the received packet;
2. check if *encryption_enabled* is set to true; if *encryption_enabled* is set to false, no encryption is supported by the given entity, thus steps 4 ... 11 and 15 ... 19 shall be omitted;
3. check preamble byte 1 (see FIG 4 and Table 1) for signalling as indicated in section entitled "Security mechanism signalling";
   - if *byte_1_value* is equal to 0x55, omit steps 4 ... 11 and 15 ... 19;
   - if *byte_1_value* is equal to 0x05, omit steps 4 ... 11;
   - if *byte_1_value* is equal to 0x28, omit steps 15 ... 19;
   - if *byte_1_value* is equal to 0xFF, set *key_regen_complete* to **true**;
4. fetch current UPEK/DPEK key (DPEK in ONU, UPEK in OLT) and store in *local_preamble_key*;
5. fetch bytes 4, 5 and 2 (exactly in this order) and store in *local_preamble_key*_*encrypted*;
6. call *decrypt_xOR* function with *local_preamble_key* and *local_preamble_key_encrypted* as parameters; the function shall return *local_decrypted_value* (24 bits), in which 16 first bits (2 bytes) are stored in *local_preamble_key_LLID* and following 8 bits (1 byte) in *local_preamble_key_CRC8* variables containing decrypted chaotic keys used to encrypt LLID and CRC8 fields;
7. fetch bytes 7 and 6 (LLID) and store *local_LLID_encrypted* variable;
8. fetch byte 8 (CRC8) and store in *local_CRC8_encrypted* variable;
9. call *decrypt_xOR* function with *local_preamble_key_LLID* and *local_LLID_encrypted* as parameters; the function shall return *local_decrypted_value* (16 bits), which is stored in *local_LLID* variable;
10.call *decrypt_xOR* function with *local_preamble_key_ CRC8* and *local_ CRC8_encrypted* as parameters; the function shall return *local_decrypted_value* (8 bits), which is stored in *local_CRC8* variable;
11. reconstruct the encrypted preamble by replacing bytes 1,2, 4 and 5 with 0x55 sequences, byte 3 with 0xD5, bytes 6 and 7 with *local_LLID* variable, byte 8 with *local_CRC8* variable;
12. calculate the CRC8 and compare with the value stored in *local_CRC8* variable; in case of incorrect CRC8 the received data frame is discarded;
13.compare the LLID stored in *local_LLID* variable with LLID list present in the ONU/OLT and discard a frame bearing unknown or mismatching LLID;
14. replace the SLD and LLID fields with normal preamble and the CRC8 field with the SFD;
15. if *key_regen_complete* variable is **true,** dispose of the current key set and fetch a new key set;
16. fetch current PEK key and store in *local_payload_key;*
17.store bytes 9 ... *N* (*N* - current data frame size) in *local_payload* variable;
18. call *decrypt_AES* function with *local_payload_key* and *local_payload* variables as parameters; the function shall return *local_decrypted_payload* variable containing decoded data frame payload;
19. replace the encrypted payload with the decrypted payload stored locally in the *local_decrypted_payload* variable;
20. transfer the packet to the appropriate MAC.

### Transmit function

The standard ***transmit*** function of the extended RS as defined in [1] performs the following functions:
1. replace the proper data fields within a standard Ethernet preamble as defined in FIG 4, Table 1 and [3]:
   - bytes 1, 2, 4 and 5 with 0x55 value;
   - byte 3 with SLD value (0xD5 value);
   - bytes 6 and 7 with current LLID;
2. calculate the CRC8 value for the given preamble structure and place it into byte 8;

In order to support the LinkSec, the ***transmit*** function will have to be modified as follows:
1. check if *encryption_enabled* is set to true; if *encryption_enabled* is set to **false,** no encryption is supported by the given entity, thus steps 4 ... 18 shall be omitted;
2. replace the proper data fields within a standard Ethernet preamble as defined in Figure 4, Table 1 and [5]:
   - bytes 1, 2, 4 and 5 with 0x55 value;
   - byte 3 with SLD value (0xD5 value);
   - bytes 6 and 7 with current LLID;
3. calculate the CRC8 value for the given preamble structure and place it into byte 8;
4. store bytes 9 ... *N* (*N* - current data frame size) of the current data frame as received from the upper MAC layer in *local_payload* variable;
5. fetch current PEK key and store in *local_payload_key*;
6. call *encrypt_AES* function with *local_payload_key* and *local_payload* variables as parameters; the function shall return *local_encrypted_payload* variable containing encoded data frame payload;
7. replace the payload with the encrypted payload stored locally in the *local_encrypted_payload* variable;
8. fetch current UPEK/DPEK key (UPEK in ONU, DPEK in OLT) and store in *local_preamble_key*;
9. generate *local_preamble_key_LLID* as a random 16 bit value;
10. generate *local_preamble_key_CRC8* as a random 8 bit value;
11. fetch current CRC8 data field and store it into *local_CRC8* variable;
12.call *encrypt_xOR* function with *local_preamble_key_CRC8* and *local_CRC8* as parameters; the function shall return *local_encrypted_value* (8 bits long), which is stored in *local_encrypted_CRC8* variable;
13. fetch current LLIC data field and store it into *local_LLID* variable;
14.call *encrypt_xOR* function with *local_preamble_key_LLID* and *local_LLID* as parameters; the function shall return *local_encrypted_value* (16 bits long), which is stored in *local_encrypted_LLID* variable;
15. store local_preamble_key_LLID and local_preamble_key_CRC8 into a single variable local_random_key;
16. call *encrypt_xOR* function with *local_preamble_key* and *local_random_key* as parameters; the function shall return *local_encrypted_value* (24 bits long), which is stored in *local_encrypted_random_key* variable;
17. bytes 4 and 5 shall be overwritten with bytes 2 and 3 of the *local_encrypted_random_key* variable;
18. byte 2 shall be overwritten with byte 1 of the *local_encrypted_random_key* variable;
19.byte 2 shall be compared with the SLD field value; if both field bear the same bit sequence (have the same value), procedure returns to step 10 and generates the random key for CRC8 field again. This step is necessary since the frame alignment is based on the location and detection of the SLD field, therefore encrypted CRC8 field code with the bit sequence equal to SLD field contents might results in frame misalignment. Thus the requirement for mismatch between the SLD field and the encrypted CRC8 random key.

### Required memory and hardware resources

### Memory and hardware resources at ONU

The EDFPSP security protocol at the ONU level requires storage of a single instance of PEK/UPEK/DPEK/ONU ID key set in the form of a current key set, as well as reserve enough place for a pre-generated key set as described above. The size of a complete key set is estimated at 128 + 24 + 24 + 128 bits = 304 bits. Since the ONU has to provide enough storage for two key sets, it has to be able to store 304 + 304 = 608 bits = 76 bytes.

Additionally, the ONU should have appropriate hardware support for encryption/decryption mechanism for the following functions:
- A high quality random number generator, possibly with full hardware implementation, with the cycle period of at least 2¹⁰⁰, at best;
- xOR encryption/decryption for UPEK/DPEK key pair for Ethernet Data Frame Preamble Security Protocol (EDFPSP);
- 128 bit AES encryption/decryption for PEK key for Ethernet Data Frame payLoad Security Protocol (EDFLSP).

### Memory and hardware resources at OLT

The EDFPSP security protocol at the OLT level requires storage of a single instance of PEK/UPEK/DPEK/ONU ID key set for each ONU MAC registered and accounted for in the system. The OLT has therefore to provide enough storage of 128 + 24 + 24 + 128 bits = 304 bits for each registered ONU. In an *N* ONU system, that accounts for *N* times 304 bits to store all necessary key sets associated with all the active ONUs. For example, in a 16 ONU system it accounts to 16 times 304 bits = 4864 bits = 608 bytes.

Additionally, the OLT should have appropriate hardware support for encryption/decryption mechanism for the following functions:
- xOR encryption/decryption for UPEK/DPEK key pair for Ethernet Data Frame Preamble Security Protocol (EDFPSP);
- 128 bit AES encryption/decryption for PEK key for Ethernet Data Frame payLoad Security Protocol (EDFLSP).

### New MPCP DU messages for EDFPSP / EDFLSP security mechanisms

In order to further ensure full backward compatibility with the existing EPON solutions, the MPCP signalling envisaged for the proposed security mechanism is based on 3 new MPCP DU messages - KEY_REQ, KEY_REGEN and KEY_ACK - as described above.

### KEY_REQ (proposed Opcode 00-07)

The purpose of the KEY_REQ message is twofold:
- the first and most vital functionality is signalling the beginning of the key regeneration process for the particular ONU. As such, the OLT at a certain moment of time creates an instance of the KEY_REQ message targeted at the particular ONU, which upon its reception shall produce a corresponding KEY_REGEN message containing a new key set.
- since the following KEY_REGEN message will be sent by a particular ONU as a part of its standard upstream transmission (thus the key regeneration process is performed in-band and without interruption of the standard data flows both in upstream and downstream directions), such an ONU should have an upstream transmission slot allocated by the DBA agent triggered by the *key_regenerate* function operating at the OLT. Therefore, the KEY_REQ has the basic functionality of a standard GATE message and its task it to grant transmission window to a particular ONU sufficient for upstream transmission of a single KEY_REGEN message at a predefined moment of time.

The KEY_REQ shall always convey only one grant per ONU and shall be created and targeted at the ONU and not a particular LLID associated with the given ONU. Therefore, the LLID included in the KEY_REQ message is of lesser importance as long as it belongs to the given target ONU, since once the message is successfully filtered, the *key_renegerate* function running at the ONU is going to perform the key regeneration process as described above.

The KEY_REQ contains the following fields:
***Destination Address (DA)*.** The DA in a MPCPDU is the MAC Control Multicast address, as specified in the annexes to IEEE 802.3 ah clause 31, or the individual MAC address associated with the port to which the MPCPDU is destined;
***Source Address (SA)*.** The SA in a MPCPDU is the individual MAC address associated with the port through which the MPCPDU is transmitted. For MPCP DU messages originating at the OLT end, this can be the address of any of the individual MAC ports. These MAC ports may all share a single unicast address, as explained in IEEE 802.3 ah, clause 64.1.2;
***Length*/*Type*.** MPCPDUs are always Type encoded, and carry the *MAC_Control_Type* field value as specified in IEEE 802.3 ah, clause 31.4.1.3;
***Opcode*.** The *opcode* identifies the specific MPCPDU being encapsulated. In order to maintain full backward compatibility with the existing EPON solutions, a new Opcode is proposed for the given MPCP message from the Reserved/Unused group with the value of 00-07;
***Timestamp*.** The timestamp field conveys the content of the *localTime* register at the time of transmission of the MPCPDUs. This field is 32 bits long, and counts 16 bit transmissions. The timestamp counts time with a 16 bit time granularity (1 TQ = 16 ns = 2 B @ 1 Gbps);
***Flags.*** This is an 8 bit register that holds the following flags (Table 2):
   - The ***Number of grants*** field contains the number of grants, composed of valid *Length, Start Time* pairs in the MPCPDU. This is a number between 0 and 4. If *Number of grants* is set to 0, the sole purpose of the message is conveying a timestamp to an ONU;
   - The ***Discovery flag*** field indicates that the signalled grants would be used for the discovery process, in which case a single grant shall be issued in the gate message;
   - The ***Force Report*** flag fields ask the ONU to issue a REPORT message related to each corresponding grant number at each corresponding transmission opportunity indicated in this GATE;
***Grant #n Length***. Length of the signalled grant, this is a 16 bit unsigned field. The length is counted in 16 bit time increments. There are 4 Grants that are possibly packed into the GATE MPCPDU. The *laserOnTime, syncTime, and laserOffTime* are included in and thus consume part of the *Grant #n Length*;
***Grant #n Start Time*.** Start time of the grant, this is a 32 bit unsigned field. The start time is compared to the local ONU clock, to correlate the start of the grant with the predefined moment of time, estimated by the OLT scheduler relative to the OLT clock. Transmitted values shall satisfy the condition *Grant #n Start Time < Grant #n+1 Start Time* for consecutive grants within the same GATE MPCPDU;
***Sync Time*.** This is an unsigned 16 bit value indicating the required synchronization time of the OLT receiver. During the synchronization time the ONU shall send IDLE code-pairs. The value is counted in 16 bit time increments. The advertised value takes into account the synchronization requirements for all receiver elements, including PMD, PMA, and PCS - Physical Medium Dependent, Physical Medium Attachment, Physical Medium Sublayer. This field is present only when the gate is a discovery gate, as signalled by the Discovery flag, and is not present otherwise;
***Pad*/*Reserved*.** This is an empty field that is transmitted as zeros and ignored on reception, when constructing a complying MPCP protocol implementation. The size of this field depends on the used *Grant #n Length*/*Start Time* entry-pairs, and accordingly varies in length from 13 to 39.

**Table 2 :KEY_REQ MPCP DU (Opcode 00-07) Flags field**

| Bit | Flag field | Values | Value for KEY_REQ |
|---|---|---|---|
| 0-2 | Number of in-dividual grants | 0-4 | Always 1 |
| 3 | Discovery | 0 - normal GATE; 1- DISCOVERY GATE. | Always 0 |
| 4 | Force REPORT grant 1 | 0 - no REPORT required; 1- REPORT MPCPDU should be added after the end of the corresponding upstream transmission slot. | Always 0 |
| 5 | Force REPORT grant 2 | 0 - no REPORT required; 1- REPORT MPCPDU should be added after the end of the corresponding upstream transmission slot. | Always 0 |
| 6 | Force REPORT grant 3 | 0 - no REPORT required; 1- REPORT MPCPDU should be added after the end of the corresponding upstream transmission slot. | Always 0 |
| 7 | Force REPORT grant 4 | 0 - no REPORT required; 1- REPORT MPCPDU should be added after the end of the corresponding upstream transmission slot. | Always 0 |

The proposed KEY_REQ message shall be therefore generated by the DBA agent in the OLT and differentiated from a standard GATE message only on the basis of the Opcode value.

### KEY_REGEN (proposed Opcode 00-08)

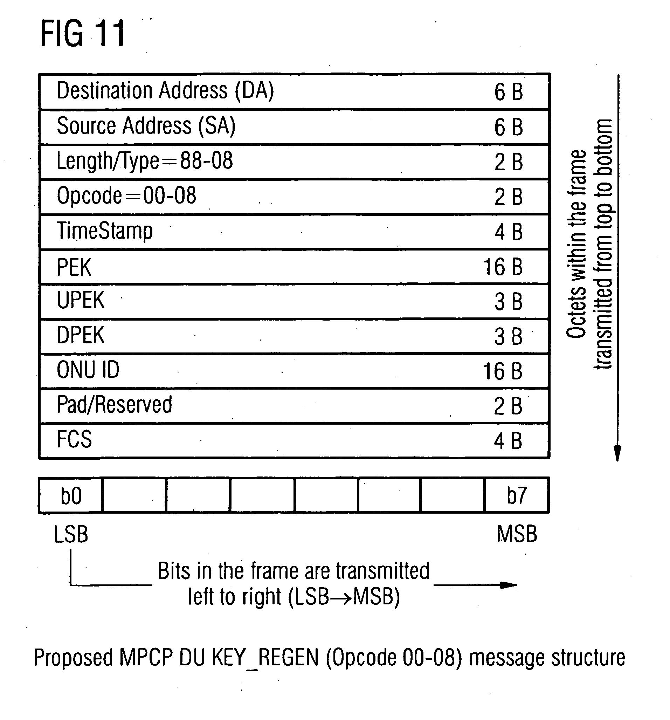

The purpose of the KEY_REGEN message is as follows:
- The KEY_REGEN message is the response generated by the ONU to the KEY_REQ message delivered from the OLT in the downstream direction to any of the ONU's LLIDs.
- KEY_REGEN message shall store the new key set for the particular ONU, generated in one of the possible ways described in section entitled "Modifications to discovery handshake", as indicated in FIG 11. The key set defined for a particular ONU is stored in the KEY_REGEN message in the following way:
   ○ 128 bit long PEK key for AES payload encryption/decryption;
   ○ 24 bit long UPEK key;
   ○ 24 bit long DPEK key;
   ○ 128 bit long ONU ID number (only for identification purposes).

As indicated above, the ONU ID is used for data source origin verification purposes. As indicated previously, the ONU ID is used as an electronic signature to verify the origin of the given key regeneration request. This way, the OLT might verify whether the given ONU transmitting an upstream KEY_REGEN message is actually the entity authorised to use the given UPEK/PEK key set.
The KEY_REGEN MPCP DU is composed of the following data fields:
***Destination Address (DA)*.** The DA in a MPCPDU is the MAC Control Multicast address, as specified in the annexes to IEEE 802.3 ah clause 31 [1], or the individual MAC address associated with the port to which the MPCPDU is destined;
***Source Address (SA).*** The SA in a MPCPDU is the individual MAC address associated with the port through which the MPCPDU is transmitted. For MPCP DU messages originating at the OLT end, this can be the address of any of the individual MAC ports. These MAC ports may all share a single unicast address, as explained in IEEE 802.3 ah, clause 64.1.2 [2];
***Length*/*****Type.*** MPCPDUs are always Type encoded, and carry the *MAC_Control_Type* field value as specified in IEEE 802.3 ah, clause 31.4.1.3 [1];
***Opcode*.** The *opcode* identifies the specific MPCPDU being encapsulated. In order to maintain full backward compatibility with the existing EPON solutions, a new Opcode is proposed for the given MPCP message from the Reserved/Unused group with the value of 00-08.
***Timestamp*.** The timestamp field conveys the contents of the *localTime* register at the time of transmission of the MPCPDUs. This field is 32 bits long, and counts 16 bit transmissions. The timestamp counts time with a 16 bit time granularity (1 TQ = 16 ns = 2 B @ 1 Gbps);
***PEK key*** used for encryption/decryption of the Ethernet data frame payload; this data field is 128 bits long;
***UPEK key*** used for encryption/decryption of the Ethernet data frame preamble in the upstream channel (from an ONU to the OLT); this data field is 24 bits long;
***DPEK key*** used for encryption/decryption of the Ethernet data frame preamble in the downstream channel (from an ONU to the OLT); this data field is 24 bits long;
***ONU ID*** used for data source origin verification purposes; this data field is 128 bits long;
***Pad*/*Reserved*.** This is an empty field that is transmitted as zeros and ignored on reception, when constructing a complying MPCP protocol implementation. The size of this field is equal to 2 bytes.

### KEY_ACK (proposed Opcode 00-09)

The purpose of the KEY_ACK message is as follows:
- The OLT sends the KEY_ACK message upon successful completion of the key regeneration process so as to force the ONU to drop the previous key set and use a new one. The reception of this particular MPCP message defines therefore the conclusion of a successful key regeneration and exchange process between the two entities involved in the process (OLT and one of the connected ONUs).
- Assuming that the key exchange and regeneration process is not completed successfully, the OLT shall not transmit the KEY_ACK message to the particular ONU. Instead, a new KEY_REQ message shall be transmitted to a particular ONU, requesting a repeated key exchange process. Such a process shall be repeated a maximum of 3 times. Assuming that 3 successive key exchange and regeneration attempts fail, the OLT shall force the particular ONU to de-register, removing any key set related entries in the OLT tables and allowing for a renewed registration attempt during the following discovery window.

The KEY_REGEN MPCP DU is composed of the following data fields:
***Destination Address (DA).*** The DA in a MPCPDU is the MAC Control Multicast address, as specified in the annexes to IEEE 802.3 ah clause 31 [1], or the individual MAC address associated with the port to which the MPCPDU is destined;
***Source Address (SA).*** The SA in a MPCPDU is the individual MAC address associated with the port through which the MPCPDU is transmitted. For MPCP DU messages originating at the OLT end, this can be the address of any of the individual MAC ports. These MAC ports may all share a single unicast address, as explained in IEEE 802.3 ah, clause 64.1.2 [2];
***Length*/*Type*.** MPCPDUs are always Type encoded, and carry the *MAC_Control_Type* field value as specified in IEEE 802.3 ah, clause 31.4.1.3 [1];
***Opcode*.** The *opcode* identifies the specific MPCPDU being encapsulated. In order to maintain full backward compatibility with the existing EPON solutions, a new Opcode is proposed for the given MPCP message from the Reserved/Unused group with the value of 00-09.
***Timestamp.*** The timestamp field conveys the content of the *localTime* register at the time of transmission of the MPCPDUs. This field is 32 bits long, and counts 16 bit transmissions. The timestamp counts time with a 16 bit time granularity (1 TQ = 16 ns = 2 B @ 1 Gbps);
***Pad*/*Reserved.*** This is an empty field that is transmitted as zeros and ignored on reception, when constructing a complying MPCP protocol implementation. The size of this field is equal to 40 bytes.

### Backward compatibility

The proposed security protocols are characterised by a complete backward compatibility since the encryption/decryption functions (as indicated above) are implemented at the bottom of the RS layer and are designed to maintain fully transparency in case of non-LinkSec data frames (as indicated above). Possible deployment scenarios are as follows:
- ***LinkSec compatible OLT, LinkSec incompatible ONUs*:** in this case the ONUs do not support the LinkSec protocol, therefore they will not tag the REGISTER_REQ messages in accordance with 0 and thus the OLT based key set list will be filled with empty key set values. This way the OLT will know that the ONU population does not support encryption and will use empty encryption keys in the downstream channel. Additionally, no protocol signalling as indicated in section entitled "Security mechanism signalling", will be used.
- ***LinkSec compatible ONUs, LinkSec incompatible OLT:*** in this case, the ONUs will tag the REGISTER_REQ messages and fill the REGISTER_REQ with the current key set as indicated above. The OLT will not be able to associate the key sets with the particular ONU MAC addresses and execute encryption in the downstream channel. Additionally, the REGISTER message produced by such non-LinkSec OLT will not contain any signalling as indicated above, thus the ONU will turn set the local flag *encryption_enabled* to **false** and skip LinkSec encryption/decryption mechanisms for the future data packets.
- ***LinkSec compatible and incompatible ONUs, non-LinkSec OLT:*** see point 2 for LinkSec compatible ONUs. In case of LinkSec incompatible ONUs, they follow a standard discovery protocol and data transmission mechanism as defined in [1]
- ***LinkSec compatible and incompatible ONUs, LinkSec compatible OLT:*** see point 1 for LinkSec incompatible ONU case. All LinkSec compatible ONUs shall act as indicated above, enjoying full benefits of the LinkSec mechanism.

### LinkSec and QoS

- preamble encryption and decryption is a simple Boolean operation performed in a bit-wise manner, thus its impact on any SLA or any other type of QoS agreements between the customer and the service provider is negligible. Additionally, the delay introduced by the preamble encryption/decryption is constant for any packet size, thus can be easily mitigated by appropriately shortening the polling cycle (it is estimated that the polling cycle should be decreased by approximately 0.12% to counteract the delay imposed during preamble encryption/decryption process;
- Hardware implementation of AES 128 bit encryption/decryption mechanism should allow for on-demand packet encryption/decryption even for the shortest possible data frame with 64 byte long payload. Assembly language software AES implementation optimised for PIII processor, as indicated above, allows for 1.7 µs encryption/decryption time for the shortest possible packet (64 bytes in a payload). It is expected that a low-cost hardware implementation of AES algorithm will allow for sub-µs encryption/decryption times regardless of payload length. In case of high priority data traffic (like VoIP or VoD), data packets are typically relatively small, thus the AES encryption/decryption overhead should be minimum. It must be stressed though that the exact values are implementation dependent and cannot be assessed without selection of specific implementation architecture.
- The proposed key regeneration and exchange mechanism has a marginal impact on the overall bandwidth amount available to traffic. A single ONU needs only 3, 64 bytes long MPCP messages every 15 minutes to complete key regeneration process, which is less than 2e-7% of available bandwidth within this amount of time.
- The proposed security mechanism does not need to transport any additional encryption specific information within the packet payload, thus the overall security overhead in the proposed system is estimated at 0%. The amount of data transmitted in the LinkSec compliant and legacy EPON systems is therefore equal, excluding key exchange and regeneration cycle, as indicated above.

### Examples of security mechanism building blocks

### xOR encryption / decryption algorithm used for EDFPSP mechanism

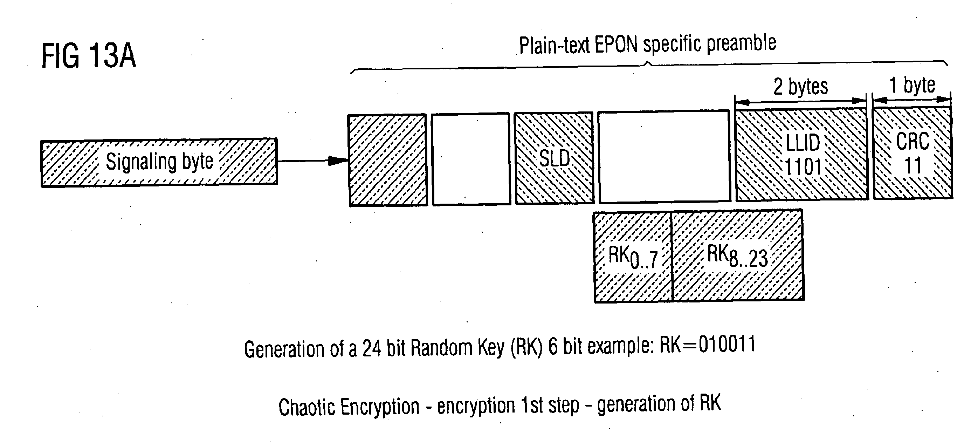

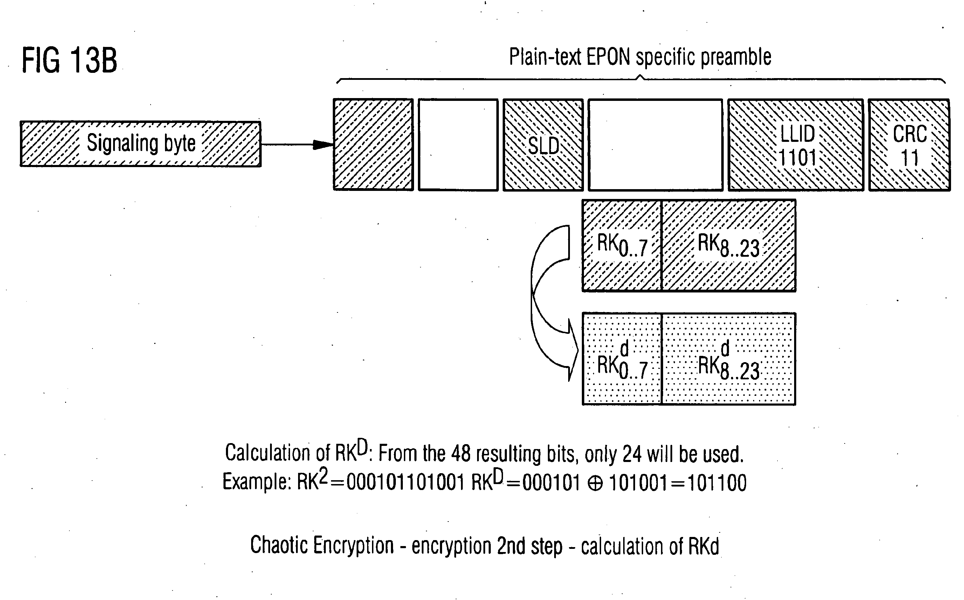

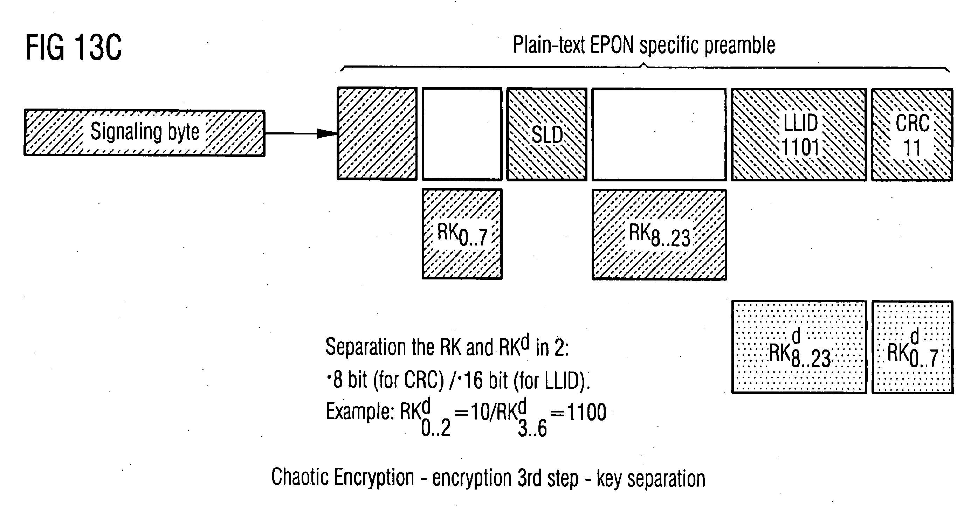

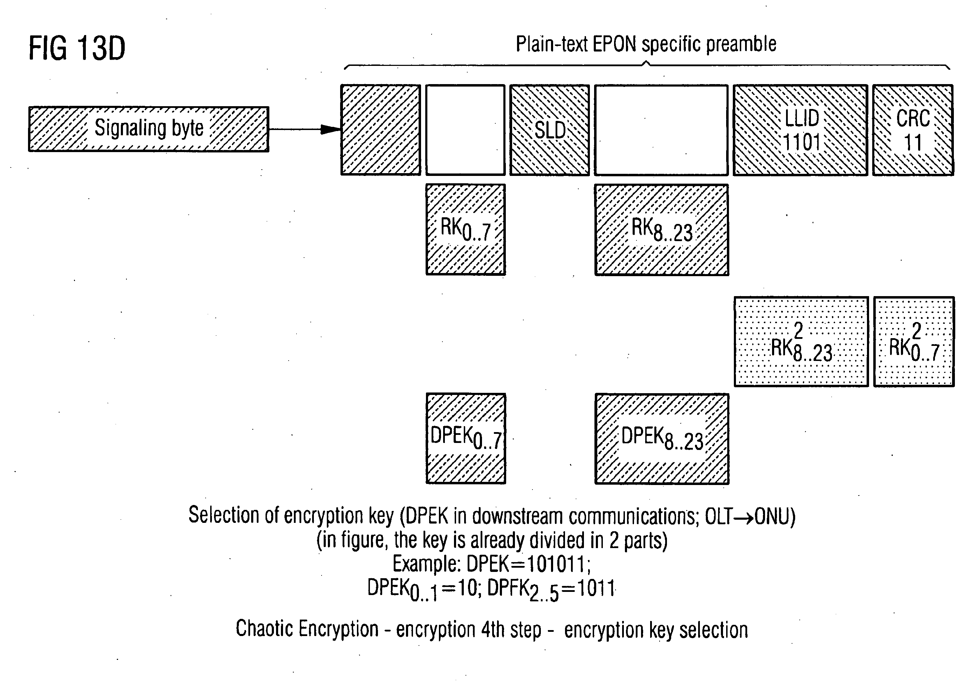

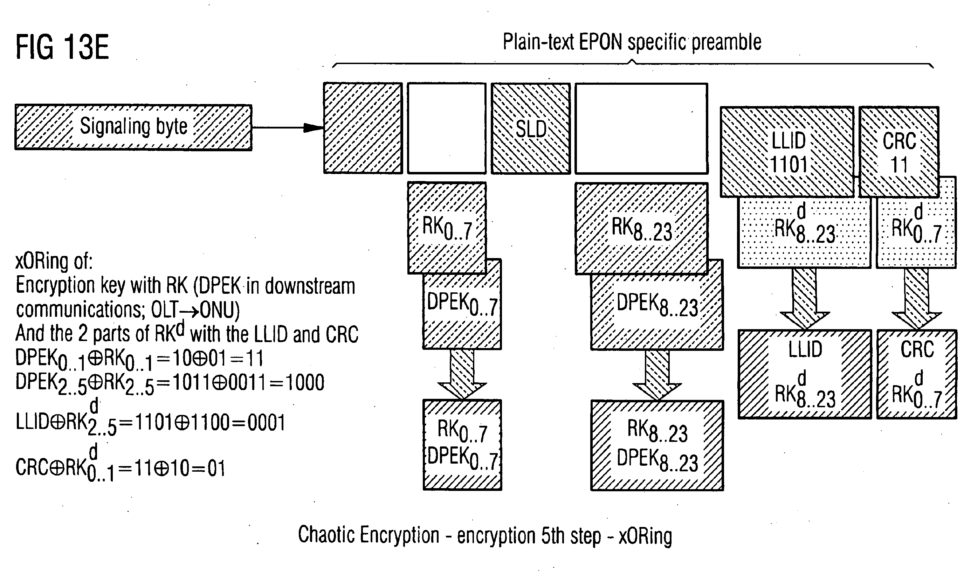

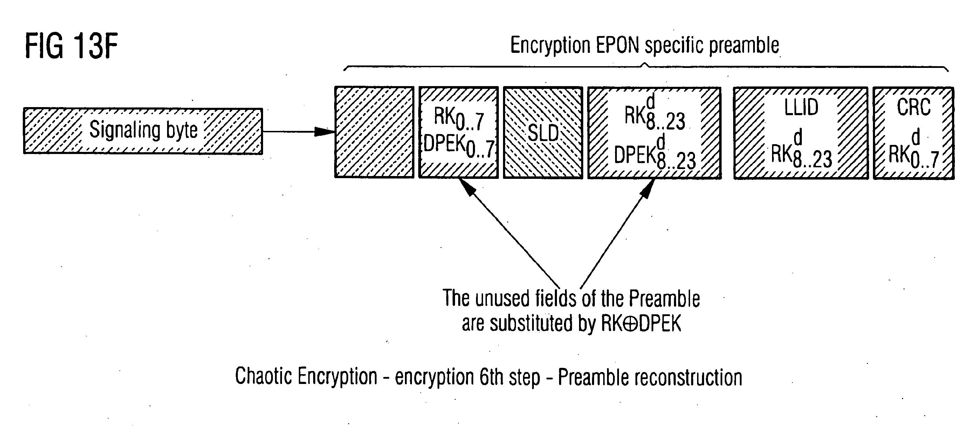

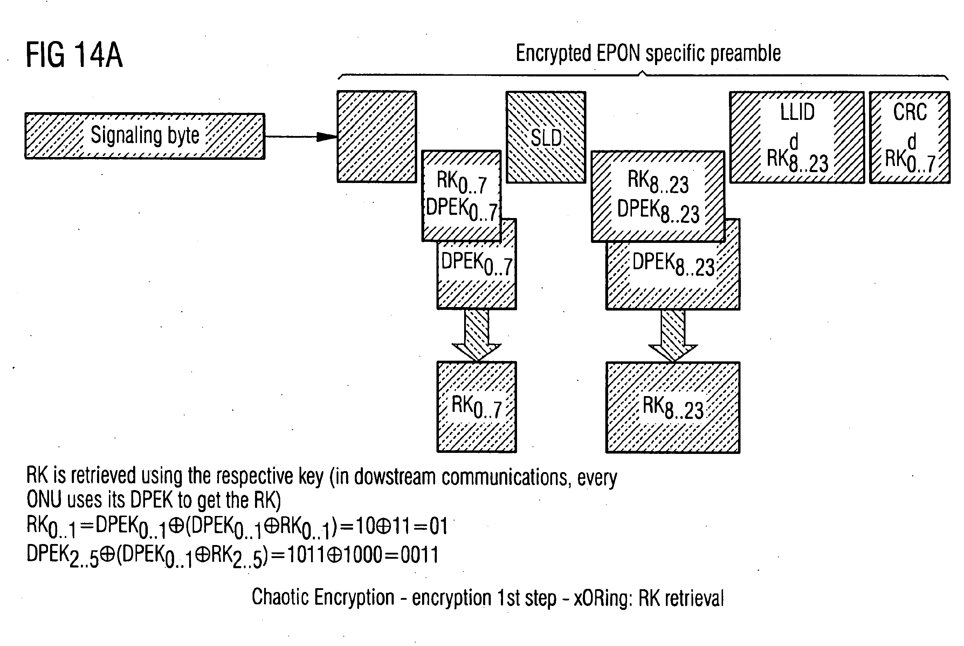

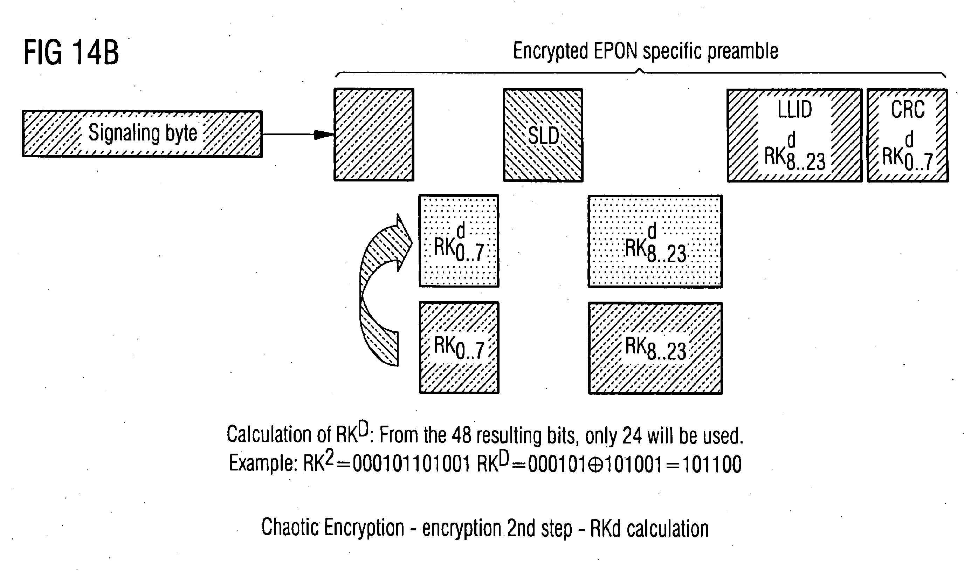

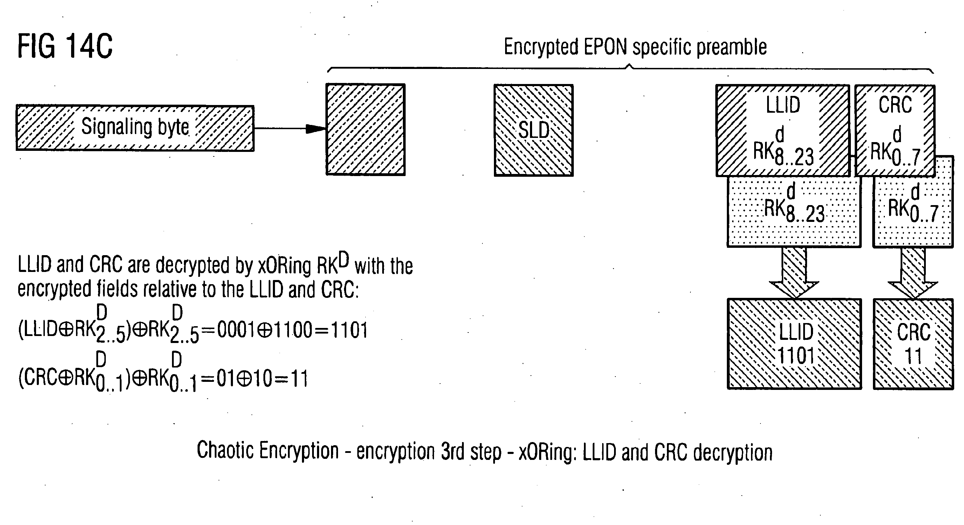

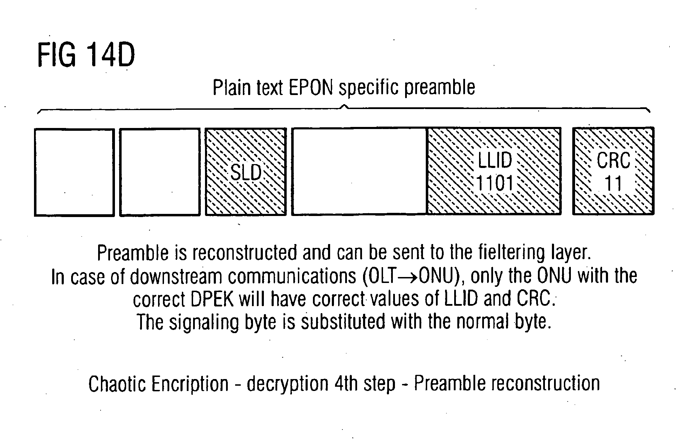

The presented operations are basic xOR performed on appropriate bytes extracted from the Ethernet Data Frame Preamble. In case of encryption process (*EncryptPreamble*), the data flow is as follows: (see also FIG 13 and 14 which are explaining the encryption / decryption algorithm according to the invention in a self explaining manner).
- obtain the current preamble from plain-text data frame;
- generate a chaotic random key RK (24 bits long = 3 bytes) using *generateKey* function, where the key is generated in a random fashion bit by bit; obviously, generation of a complete 24 bit long value is also allowed;
- calculate the square of the Random key RK generated in step 2, using *squareRK* function;
   o 24 bit long RK produces 48 bit long value;
   o 24 older bits are xORed with 24 younger bits, producing a unique RK^{D} value;
   o squaring introduces non-linear transform into the coding system allowing for high quality protection against any form of traffic monitoring;
- fetch the current UPEK/DPEK key (UPEK for ONU, DPEK for OLT);
- encrypt the RK with the current UPEK/DPEK key (UPEK for ONU, DPEK for OLT);
- encrypt LLID and CRC8 blocks with RK^{D} key;
- place encrypted LLID, CRC8 and RK key in the preamble fields (bytes 2,4,5,6,7,8);

In case of decryption process, the data flow is reversed and is as follows:
- obtain the current preamble from encoded data frame;
- obtain the current encrypted RK key from the preamble (bytes 2,4,5);
- obtain the current DPEK/UPEK key (DPEK for ONU and UPEK for OLT);
- decode encoded RK key using key obtained in step 3;
- calculate the RK^{D} key using a pre-defined non-linear function e.g. *squareRK;*
- decrypt LLID and CRC8 fields using the encoded RK^{D} key obtained in step 5;
- replace LLID and CRC8 fields in the preamble with values obtained in step 6;
- replace bytes 3,4,5 in the preamble with 0x55 sequence; Example of the above method operation is presented below:

Frame not encrypted:
   |0x55 0x55 |0xD5 |0x55 0x55 |0x00 0x02 |0x55 | 0x00 0x00 0x00 0x00 0x00 0x01 | 0x00 0x00 0x00 0x00 0x00 0x02 |0x00 0x74 |Upstream Message! |0x00 |
Preamble Encrypted too:
   |0xFF 0x44 l0xD5 l0x4D 0x51 |0x00 0x14 |0x10 | 0x00 0x00 0x00 0x00 0x00 0x01 | 0x00 0x00 0x00 0x00 0x00 0x02 |0x00 0x74 |Upstream Message! |0x00 |
OLT decrypted the Preamble:
   |0xFF 0x55 |0xD5 |0x55 0x55 |0x00 0x02 |0x55 | 0x00 0x00 0x00 0x00 0x00 0x0 | 0x00 0x00 0x00 0x00 0x00 0x02 |0x00 0x74 |Upstream Message! |0x00 |

Data fields are as follows (separated by "|" character):
- first 2 preamble bytes (0x55 sequences in the plain-text format);
- SLD byte (0xD5 sequence in the plain-text format);
- following 2 preamble bytes (0x55 sequences in the plain-text format);
- LLID (2 bytes);
- CRC8 calculated from fields 2 to 4 inclusive;
- SA and DA (both 6 byte long);
- length type (0x00 0x74 for all data and MPCP messages);
- Payload (variable length);
- EOP (End Of Packet);

### Chaotic xOR and RK^{D} based encryption/decryption strength

In order to asses the cryptographic strength of the proposed chaotic xOR / RK^{D} encryption/decryption mechanism, the following aspects must be considered:
The RK key is a unique 24 bit sequence, generated randomly for each encrypted Ethernet Data Frame Preamble (LLID and CRC8) data blocks, both in upstream and downstream direction, resulting in a chaotic translation of the existing LLID / CRC8 preamble marking into a stochastic domain, where no monitoring is possible. It should be mentioned that any other method for producing uncorrelated values can be used.

Consider a simple example (4 bits represented for simplification, consideration is extensible to full 24 bit length; ⊕ = xOR):
LLID/CRC8 = 1110; generated RK = 1101; RK² = RK x RK = 10101001 and RK^{D} = 10101001 = 0011; UPEK = 1110; RKUPEK = 0011; RK^{D}LLID/CRC8 = 1101;
LLID/CRC8 = 1110; generated RK = 1001; RK² = RK x RK = 01010001 and RK^{D} = 01010001 = 0100; UPEK = 1110; RKUPEK = 0111; RK^{D}LLID/CRC8 = 1010;

For the same LLID/CRC8 block value and the same UPEK key (which is regenerated periodically as indicated in section entitled "Key set generation/regeneration process"), the encrypted RK value is different (0011 and 0111) and so is the LLID/CRC8 value (1101 and 1010).

A potential attacker, knowing that xOR operations are used to encrypt LLID/CRC8 and RK values, might attempt to xOR both resulting encryption fields (RKCUPEK and RK^{D}⊕LLID/CRC8), though introduction of RK^{D} key used to encrypt LLID/CRC8 field prevents this type of monitoring. For the first above example such xOR ((RK⊕UPEK) ⊕ ( RK^{D}⊕LLID/CRC8)) produces the value of 1110, while for the second example 1101. This way, even xOR operation drawbacks are eliminated, preventing a possible monitoring attempt. An attacker in this case would assume that two considered packets are targeted at two various ONUs, while in reality they below to the same LLID.

The chaotic xOR / RK^{D} encryption/decryption mechanism is based on the following set of simple Boolean operations:

| | |
|---|---|
| *RK* ⊕ *UPEK* | (0.1) |
| *RK^{D}*⊕ *LLID* / *CRC8* | (0.2) |

An attacker has only access to values conveyed within the data frame preamble, as defined in (0.1) and (0.2). Knowing the internal structure of the encryption/decryption algorithm, it is typically very easy to produce a method to reverse the encryption mechanism. In this case, the attacker has 3 variables (RK, UPEK, LLID and CRC8, though CRC8 is related to LLID, thus it can be eliminated easily from the equations) but only two equations can be constructed, based on values defined in (0.1) and (0.2). This way, it is mathematically unsound to attempt solving an equation system where the number of equations is lower than the number of variables. Additionally, application of the RK^{D} key to encrypt LLID/CRC8 fields allows for introduction of circular relationship inside the encryption mechanism, which cannot be eliminated in a mathematical manner. Knowing RK⊕UPEK and RK^{D}⊕LLID/CRC8, an attacker might attempt to get rid of one of the variables in the system (namely RK or RK^{D}, since they are related) and do to so, the following operation can be performed:

| | |
|---|---|
| (*RK* ⊕ *UPEK*)² = RK²⊕. *RK.UPEK*⊕*UPEK²* | (0.3) |

Then by xORing (0.3) with (0.2), the RK^{D} is eliminated (through xOR operation), though still the middle factor from (0.3) remains, containing both UPEK and RK keys. This way, neither the RK nor UPEK keys can be eliminated from the encryption.

Since the proposed mechanism is based on non-linear chaotic xOR / RK^{D} encryption/decryption process, where the number of available variables is greater than the number of equations a potential attacker can produce, the LLID and CRC8 data fields are considered secure against any currently existing monitoring attack as long as UPEK/DPEK keys are regenerated periodically (as defined in section entitled "Key set generation/regeneration process") and the PEK AES key is secure. Current studies indicate that the proposed chaotic xOR / RK^{D} encryption/decryption process cannot be broken down using existing attack methods.

The proposed double stage EPON LinkSec security mechanism has the following advantages over any other proposed security mechanism for EPONs:
- For the first time the security mechanism allows for full data privacy in both downstream and upstream directions by employing a random key based encryption for the LLID and CRC fields which convey the system sensitive information;
- The preamble encryption mechanism is based on different upstream and downstream keys, thus preventing a malicious ONU from transmitting a fake properly encrypted upstream message;
- A unique ONU ID 128 bit sequence is used in the system to provide data origin authentication in case of system sensitive processes, like key regeneration and exchange process; presence and utilization of a unique ONU ID sequence provides additional level of verification that the entity attempting for example key exchange is actually authorized to do so.
- Simple xOR based preamble encryption process used in the EDFPSP process allows for very simple hardware implementation and requires minimum memory and processing resources - it can be readily implemented in a form of a reconfigurable logical array.
- The well known AES 128 bit long key encryption used for data frame payload provides a very strong encryption method for the user data, in accordance with most commonly existing solutions. The same PEK key is used in the upstream and downstream direction since its cryptographic strength is sufficient. Additional key regeneration every 15 minutes provides even greater level of security since the following PEK keys assigned for a given ONU will be uncorrelated.
- Any types of DoS/ToS attacks are prevented by data origin authentication in both data flow directions; additionally, masquerading and theft of service are also prevented using the very same aforementioned mechanism;
- The introduced key regeneration mechanism allows for centrally controlled key regeneration while the keys are actually generated in a distributed and uncollected manner in the ONUs and only delivered to the OLT in the safer upstream direction, encrypted with the a current set of UPEK/PEK keys;
- The proposed key regeneration procedure is based on 3 new MPCP DU messages which are also subject to encryption, thus increasing the overall security level in the system;
- The proposed signalling protocol is very simple and uses in total 1 single byte in the modified Ethernet preamble below the RS layer (byte number 1) to signal encryption and key exchange. Simultaneously, Ethernet data frames with unmodified byte value (0x55) shall be treated as legacy data frames and shall bypass both preamble and payload encryption mechanisms and follow a standard EPON defined data flow.
- The proposed security mechanism supports a full backward compatibility, allowing for coexistence of LinkSec compatible and incompatible ONUs within the same structure, thus a typically considered scenario with residential and business customers can be supported over the same network structure. Business customers would use full data privacy and security policies provided by LinkSec mechanism, while residential customer would use for example only payload encryption or no security mechanism at all, depending on the network manager choice.
- Encryption of downstream transmission prevents eavesdropping, since the encryption key is private and unique for a particular ONU in the system; that provides the necessary privacy and confidentiality for subscriber data and makes impersonation of another ONU difficult. Thus, a point-to-point virtual secure tunnel is created allowing private communication between the OLT and the different ONUs without security threat. Additional chaotic encryption of the EDFP encrypted with a currently valid DPEK key increases the security level, by providing data origin authentication and eliminating any masquerading attempts as well as any known types of data monitoring.
- Encryption of the upstream transmission prevents interception of the upstream traffic when a tap is added at the PSC device. Upstream encryption prevents impersonation since the ONU generating a frame must possess a key presumably known only to this particular ONU. Additional chaotic encryption of the EDFP with a currently valid UPEK key increases the security level by providing data origin authentication and eliminating any masquerading attempts. The ONU ID in the form of a unique 128 bit sequence provides strict authentication in case of security sensitive activities like key exchange request, allowing for double checked authentication of the entity attempting such an action.
   It should be mentioned that the method according to the invention can be used in every packet oriented or cell oriented point-to-multipoint communication network (fixed or wireless) as e.g. PON, GPON, GEPON or WIFI.

## Claims

1. A method for packet oriented transfer of information between a central communication unit (OLT) and several peripheral communication units (ONU) over a passive optical network (PON),
data packets (dp) transferred over the network (PON) comprising a header field (hf) and a payload field (pl),
wherein at least a part of header-information (LLID, CRC8) included in the header field (hf) is encrypted at transmitter side and is decrypted at receiver side,
the received data packets (dp) are processed on the basis of the decrypted header-information (LLID, CRC8),
the at least one part of the header-information is encrypted by at least one first key (RK0...7, RK8...23) or by at least one key (RK^{D}0...7, RK^{D} 8...23) derived from that,
**characterised in that,**
the at least one first key (RK0...7, RK8...23) or the key (RK^{D}0...7, RK^{D}8...23) derived from that is generated new respectively for each data packet (dp) to be transferred,
the at least one first key (RK0...7, RK8...23) or the key (RK^{D}0...7, RK^{D}8...23) derived from that is encrypted by at least one second key (DPEK0...7, DPEK8...23, UPEK0...7, UPEK 8...23),
the encrypted at least one first key or the encrypted key (RK^{D}0...7, RK^{D}8...23) derived from that is inserted into the data packet (dp), and
LLID information (LLID) included in the header field is encrypted by the at least one first key (RK0...7, RK8...23) or the key (RK^{D}0...7, RK^{D}8...23) derived from that.

2. The method according to claim 1,
**characterised in that,**
at least one second key (DPEK0...7, DPEK8...23, UPEK0...7, UPEK 8...23) is generated respectively by the peripheral communication units (ONU) and is transmitted to the central communication unit (OLT),
whereby for transmitting information between the central (OLT) and one of the peripheral communication units (ONU) the at least one second key (DPEK0...7, DPEK8...23, UPEK0...7, UPEK 8...23) generated by that peripheral communication unit (ONU) respectively is used for encrypting the at least one first key (RK0...7, RK8...23) or the key (RK^{D}0...7, RK^{D}8...23) derived from that.

3. The method according to claim 2,
**characterised in that,**
at least one second key is generated respectively for upstream (UPEK0...7, UPEK 8...23) and for downstream (DPEK0...7, DPEK8...23) direction.

4. The method according to claim 2 or 3,
**characterised in that,**
the at least one second key (DPEK0...7, DPEK8...23, UPEK0...7, UPEK 8...23) is valid only for a given time period and a new at least one second key is generated respectively after expiring of that given time period.

5. The method according to one of the claims 2 to 4,
**characterised in that,**
the at least one second key (DPEK0...7, DPEK8...23, UPEK0...7, UPEK 8...23) is generated new by request of the central communication unit (OLT).

6. The method according to one of the claims 2 to 5,
**characterised in that,**
the generated at least one second key (DPEK0...7, DPEK8...23, UPEK0...7, UPEK 8...23) is used by the peripheral communication unit for encryption only after acknowledgement of receipt of the new at least one second key (DPEK0...7, DPEK8...23, UPEK0...7, UPEK 8...23) from the central communication unit (OLT).

7. The method according to one of the preceding claims,
**characterised in that,**
the at least one first key (RK0...7, RK8...23) is generated randomly.

8. The method according to one of the preceding claims,
**characterised in that,**
that the derived key (RK^{D}0...7, RK^{D}8...23) is derived by a non-liriear-transformation from the at least one first key (RK0...7, RK8...23).

9. The method according to claim 8,
**characterised in that**,
that the non-linear-transformation is realized by a square-function.

10. The method according to one of the preceding claims,
**characterised in that,**
that the communication network (PON) is arranged as point-to-multipoint communication network.

11. The method according to one of the preceding claims,
**characterised in that,**
that the communication network (PON) is arranged according to the standard IEEE 802.3ah.

12. The method according to one of the preceding claims,
**characterised in that,**
CRC information (CRC8) included in the header field (hf) is encrypted by the at least one first key (RK0...7) or by the key (RK^{D}0...7) derived from that.

13. The method according to one of the preceding claims,
**characterised in that,**
different first keys (RK0...7, RK8...23) or keys derived from that are used for encrypting different parts of the header-field.

14. The method according to one of the preceding claims,
**characterised in that,**
during reception of a data packet the included at least one first encrypted key or the included encrypted key (RK^{D}0...7, RK^{D}8...23) derived from that, is decrypted by the at least one second key (DPEK0...7, DPEK8...23, UPEK0...7, UPEK 8...23),
the at least one encrypted part of the header-information (LLIP, CRC) is decrypted by the at least one decrypted first key (RK0...7, RK8...23) or by the decrypted key (RK^{D}0...7, RK^{D}8...23) derived from that.

15. The method according to one of the preceding claims,
**characterised in that,**
at least one part of the payload of the data packet is encrypted with at least one additional key.

16. A communication system for packet oriented transfer of information between a central communication unit (OLT) and several peripheral communication units (ONU) over a passive optical network (PON) comprising means for carrying out the method of one of the preceding claims.

## Patentansprüche

1. Verfahren für den paketorientierten Transfer von Informationen zwischen einer zentralen Kommunikationseinheit (OLT) und mehreren peripheren Kommunikationseinheiten (ONU) über ein passives optisches Netz (PON),
wobei über das Netz (PON) transferierte Datenpakete (dp) ein Kopfteilfeld (hf) und ein Nutzlastfeld (pl) umfassen,
wobei mindestens ein Teil der Kopfteilinformationen (LLID, CRC8), in dem Kopfteilfeld (hf) enthalten, auf der Senderseite verschlüsselt wird und auf der Empfängerseite entschlüsselt wird,
die empfangenen Datenpakete (dp) auf der Basis der entschlüsselten Kopfteilinformationen (LLID, CRC8) verarbeitet werden,
der mindestens eine Teil der Kopfteilinformationen durch mindestens einen ersten Schlüssel (RK0...7, RK8...23) oder durch mindestens einen davon abgeleiteten Schlüssel (RK^{D}0...7, RK^{D}8...23) verschlüsselt wird,
**dadurch gekennzeichnet, dass**
der mindestens eine erste Schlüssel (RK0...7, RK8...23) oder der davon abgeleitete Schlüssel (RK^{D}0...7, RKD⁸...23) jeweils für jedes zu transferierende Datenpaket (dp) neu generiert wird,
der mindestens eine erste Schlüssel (RK0...7, RK8...23) oder der davon abgeleitete Schlüssel (RK^{D}0...7, RKD⁸...23) durch mindestens einen zweiten Schlüssel (DPEK0...7, DPEK8...23, UPEK0...7, UPEK8...23) verschlüsselt wird,
der verschlüsselte mindestens eine erste Schlüssel oder der davon abgeleitete verschlüsselte Schlüssel (RK^{D}0...7, RK^{D}8...23) in das Datenpaket (dp) eingefügt wird und
in dem Kopfteilfeld enthaltene LLID-Informationen (LLID) durch den mindestens einen ersten Schlüssel (RK0...7, RK8...23) oder den davon abgeleiteten Schlüssel (RK^{D}0...7, RK^{D}8...23) verschlüsselt wird.

2. Verfahren nach Anspruch 1,
**dadurch gekennzeichnet, dass**
mindestens ein zweiter Schlüssel (DPEK0...7, DPEK8...23, UPEK0...7, UPEK8...23) jeweils von den peripheren Kommunikationseinheiten (ONU) generiert wird und zu der zentralen Kommunikationseinheit (OLT) übertragen wird,
wobei für das Übertragen von Informationen zwischen der zentralen (OLT) und einer der peripheren Kommunikationseinheiten (ONU) der von dieser peripheren Kommunikationseinheit (ONU) generierte mindestens eine zweite Schlüssel (DPEK0...7, DPEK8...23, UPEK0...7, UPEK8...23) jeweils für das Verschlüsseln des mindestens einen ersten Schlüssels (RK0...7, RK8...23) oder des davon abgeleiteten Schlüssels (RK^{D}0...7, RK^{D}8...23) verwendet wird.

3. Verfahren nach Anspruch 2,
**dadurch gekennzeichnet, dass**
mindestens ein zweiter Schlüssel jeweils für eine Aufwärtsrichtung (UPEK0...7, UPEK8...23) und eine Abwärtsrichtung (DPEK0...7, DPEK8...23) generiert wird.

4. Verfahren nach Anspruch 2 oder 3,
**dadurch gekennzeichnet, dass**
der mindestens eine zweite Schlüssel (DPEK0...7, DPEK8...23, UPEK0...7, UPEK8...23) nur für eine gegebene Zeitperiode gültig ist und ein neuer mindestens ein zweiter Schlüssel jeweils nach dem Ablaufen dieser gegebenen Zeitperiode generiert wird.

5. Verfahren nach einem der Ansprüche 2 bis 4,
**dadurch gekennzeichnet, dass**
der mindestens eine zweite Schlüssel (DPEK0...7, DPEK8...23, UPEK0...7, UPEK8...23) durch Anforderung der zentralen Kommunikationseinheit (OLT) neu generiert wird.

6. Verfahren nach einem der Ansprüche 2 bis 5,
**dadurch gekennzeichnet, dass**
der generierte mindestens eine zweite Schlüssel (DPEK0...7, DPEK8...23, UPEK0...7, UPEK8...23) von der peripheren Kommunikationseinheit zur Verschlüsselung nur nach einer Bestätigung des Empfangs des neuen mindestens einen zweiten Schlüssels (DPEK0...7, DPEK8...23, UPEK0...7, UPEK8...23) von der zentralen Kommunikationseinheit (OLT) verwendet wird.

7. Verfahren nach einem der vorhergehenden Ansprüche,
**dadurch gekennzeichnet, dass**
der mindestens eine erste Schlüssel (RK0...7, RK8...23) zufällig generiert wird.

8. Verfahren nach einem der vorhergehenden Ansprüche,
**dadurch gekennzeichnet, dass**
der abgeleitete Schlüssel (RK^{D}0...7, RK^{D}8...23) durch eine nichtlineare Transformation von dem mindestens einen ersten Schlüssel (RK0...7, RK8...23) abgeleitet wird.

9. Verfahren nach Anspruch 8, **dadurch gekennzeichnet, dass** die nichtlineare Transformation durch eine Quadratfunktion realisiert wird.

10. Verfahren nach einem der vorhergehenden Ansprüche,
**dadurch gekennzeichnet, dass**
das Kommunikationsnetz (PON) als ein Punkt-zu-Mehrpunkt-Kommunikationsnetz ausgelegt ist.

11. Verfahren nach einem der vorhergehenden Ansprüche, **dadurch**
**gekennzeichnet, dass**
das Kommunikationsnetz (PON) gemäß der Norm IEEE 802.3ah ausgelegt ist.

12. Verfahren nach einem der vorhergehenden Ansprüche,
**dadurch gekennzeichnet, dass**
in dem Kopfteilfeld (hf) enthaltene CRC-Informationen (CRC8) durch den mindestens einen ersten Schlüssel (RK0...7) oder durch den davon abgeleiteten Schlüssel (RK^{D}0...7) verschlüsselt wird.

13. Verfahren nach einem der vorhergehenden Ansprüche,
**dadurch gekennzeichnet, dass**
verschiedene erste Schlüssel (RK0...7, RK8...23) oder davon abgeleitete Schlüssel zum Verschlüsseln verschiedener Teile des Kopfteilfelds verwendet werden.

14. Verfahren nach einem der vorhergehenden Ansprüche,
**dadurch gekennzeichnet, dass**
während des Empfangs eines Datenpakets der enthaltene mindestens eine erste verschlüsselte Schlüssel oder der davon abgeleitete enthaltene verschlüsselte Schlüssel (RK^{D}0...7, RKD⁸...23) durch den mindestens einen zweiten Schlüssel (DPEK0...7, DPEK8...23, UPEK0...7, UPEK8...23) entschlüsselt wird, wobei der mindestens eine verschlüsselte Teil der Kopfteilinformationen (LLIP, CRC) durch den mindestens einen entschlüsselten ersten Schlüssel (RK0...7, RK8...23) oder den davon abgeleiteten entschlüsselten Schlüssel (RK^{D}0...7, RK^{D}8...23) entschlüsselt wird.

15. Verfahren nach einem der vorhergehenden Ansprüche,
**dadurch gekennzeichnet, dass**
mindestens ein Teil der Nutzlast des Datenpakets mit mindestens einem zusätzlichen Schlüssel verschlüsselt wird.

16. Kommunikationssystem für den paketorientierten Transfer von Informationen zwischen einer zentralen Kommunikationseinheit (OLT) und mehreren peripheren Kommunikationseinheiten (ONU) über ein passives optisches Netz (PON), umfassend Mittel zum Ausführen des Verfahrens eines der vorhergehenden Ansprüche.

## Revendications

1. Procédé de transfert d'informations en mode paquet entre une unité de communication centrale (OLT) et plusieurs unités de communication périphériques (ONU) sur un réseau optique passif (PON),
des paquets de données (dp) transférés sur le réseau (PON) comprenant un champ d'en-tête (hf) et un champ de données utiles (pl),
dans lequel au moins une partie des informations d'en-tête (LLID, CRC8) incluses dans le champ d'en-tête (hf) est cryptée du côté émetteur et est décryptée du côté récepteur,
les paquets de données (dp) reçus sont traités sur la base des informations d'en-tête (LLID, CRC8) décryptées,
l'au moins une partie des informations d'en-tête est cryptée par au moins une première clé (RK0...7, RK8...23) ou par au moins une clé (RK^{D}0...7, RK^{D}8...23) dérivée de celle-ci,
**caractérisé en ce que,**
l'au moins une première clé (RK0...7, RK8...23) ou la clé (RK^{D}0...7, RK^{D}8...23) dérivée de celle-ci est nouvellement générée pour chaque paquet de données (dp) devant être transféré,
l'au moins une première clé (RK0...7, RK8...23) ou la clé (RK^{D}0...7, RK^{D}8...23) dérivée de celle-ci est cryptée par au moins une deuxième clé (DPEK0...7, DPEK8...23, UPEK0...7, UPEK8...23),
l'au moins une première clé cryptée ou la clé (RK^{D}0...7, RK^{D}8...23) cryptée dérivée de celle-ci est insérée dans le paquet de données (dp), et
les informations LLID (LLID) incluses dans le champ d'en-tête sont cryptées par l'au moins une première clé (RK0...7, RK8...23) ou la clé (RK^{D}0...7, RK^{D}8...23) dérivée de celle-ci.

2. Procédé selon la revendication 1,
**caractérisé en ce que,**
au moins une deuxième clé (DPEK0...7, DPEK8...23, UPEK0...7, UPEK8...23) est générée respectivement par les unités de communication périphériques (ONU) et est transmise à l'unité de communication centrale (OLT),
d'où il résulte que pour transmettre des informations entre l'unité de communication centrale (OLT) et l'une des unités de communication périphériques (ONU), l'au moins une deuxième clé (DPEK0...7, DPEK8...23, UPEK0...7, UPEK8...23) générée par cette unité de communication périphérique (ONU) respectivement est utilisée pour crypter l'au moins une première clé (RK0...7, RK8...23) ou la clé (RK^{D}0...7, RK^{D}8...23) dérivée de celle-ci.

3. Procédé selon la revendication 2,
**caractérisé en ce que,**
au moins une deuxième clé est générée respectivement pour la direction montante (UPEK0...7, UPEK8...23) et pour la direction descendante (DPEK0...7, DPEK8...23).

4. Procédé selon la revendication 2 ou 3,
**caractérisé en ce que,**
l'au moins une deuxième clé (DPEK0...7, DPEK8...23, UPEK0...7, UPEK8...23) n'est valide que pour une période de temps donnée et une nouvelle au moins une deuxième clé est générée respectivement après expiration de cette période de temps donnée.

5. Procédé selon l'une des revendications 2 à 4,
**caractérisé en ce que,**
l'au moins une deuxième clé (DPEK0...7, DPEK8...23, UPEK0...7, UPEK8...23) est nouvellement générée sur demande de l'unité de communication centrale (OLT).

6. Procédé selon l'une des revendications 2 à 5,
**caractérisé en ce que,**
l'au moins une deuxième clé (DPEK0...7, DPEK8...23, UPEK0...7, UPEK8...23) générée est utilisée par l'unité de communication périphérique pour cryptage uniquement après accusé de réception de la nouvelle au moins une deuxième clé (DPEK0...7, DPEK8...23, UPEK0...7, UPEK8...23) de l'unité de communication centrale (OLT).

7. Procédé selon l'une des revendications précédentes,
**caractérisé en ce que,**
l'au moins une première clé (RK0...7, RK8...23) est générée de façon aléatoire.

8. Procédé selon l'une des revendications précédentes,
**caractérisé en ce que,**
la clé (RK^{D}0...7, RK^{D}8...23) dérivée est dérivée par une transformation non linéaire à partir de l'au moins une première clé (RK0...7, RK8...23).

9. Procédé selon la revendication 8,
**caractérisé en ce que,**
la transformation non linéaire est réalisée par une fonction d'élévation au carré.

10. Procédé selon l'une des revendications précédentes,
**caractérisé en ce que,**
le réseau de communication (PON) est agencé comme réseau de communication point à multipoint.

11. Procédé selon l'une des revendications précédentes,
**caractérisé en ce que,**
le réseau de communication (PON) est agencé conformément à la norme iEEE 802.3ah.

12. Procédé selon l'une des revendications précédentes,
**caractérisé en ce que,**
les informations CRC (CRC8) incluses dans le champ d'en-tête (hf) sont cryptées par l'au moins une première clé (RK0...7) ou par la clé (RK^{D}0...7) dérivée de celle-ci.

13. Procédé selon l'une des revendications précédentes,
**caractérisé en ce que,**
différentes premières clés (RK0...7, RK8...23) ou clés dérivées de celles-ci sont utilisées pour crypter différentes parties du champ d'en-tête.

14. Procédé selon l'une des revendications précédentes,
**caractérisé en ce que,**
pendant la réception d'un paquet de données, l'au moins une première clé cryptée incluse ou la clé (RK^{D}0...7, RK^{D}8...23) cryptée incluse dérivée de celle-ci, est décryptée par l'au moins une deuxième clé (DPEK0...7, DPEK8...23, UPEK0...7, UPEK8...23), l'au moins une partie cryptée des informations d'en-tête (LLIP, CRC) est décryptée par l'au moins une première clé (RK0...7, RK8...23) décryptée ou par la clé (RK^{D}0...7, RK^{D}8...23) décryptée dérivée de celle-ci.

15. Procédé selon l'une des revendications précédentes,
**caractérisé en ce que,**
au moins une partie des données utiles du paquet de données est cryptée avec au moins une clé additionnelle.

16. Système de communication pour un transfert d'informations en mode paquet entre une unité de communication centrale (OLT) et plusieurs unités de communication périphériques (ONU) sur un réseau optique passif (PON) comprenant un moyen pour mettre en oeuvre le procédé de l'une des revendications précédentes.
